# EUROPEAN PATENT APPLICATION

(11) **EP 4 818 549 A1**
(43) Date of publication of application: **07.10.2026**
(21) Application number: 24896993.3
(22) Date of filing: 09.08.2024
(51) Int. Cl.: F16H 3/54, B60L 7/24, B60W 10/02, B60W 10/18, F16D 13/52, F16D 41/12

(54) **ELECTRIC VEHICLE DRIVE DEVICE**

(30) Priority: 28.11.2023 JP 2023200851
(71) Applicant: NSK Ltd., Tokyo 141-8560 (JP)
(72) Inventor: SEKINE, Kenji, Fujisawa-shi, Kanagawa 251-8501 (JP); YAMAMOTO, Akihiro, Fujisawa-shi, Kanagawa 251-8501 (JP); MORITA, Ryuho, Fujisawa-shi, Kanagawa 251-8501 (JP)
(74) Representative: Müller-Boré & Partner Patentanwälte PartG mbB
(86) International application number: PCT/JP2024/028737
(87) International publication number: WO 2025/115301

(57) **Abstract**

To achieve a structure in a drive apparatus for electric vehicle capable of switching a reduction ratio between two levels, high and low that can smoothly switch a mode of a rotation transmission state switching device even during regenerative driving when regenerative torque acts on a drive motor. A cooperative control function is provided that, when torque is passing through a two-speed transmission 3 from an output member 9 side to an input member 8 side, and the torque is applied to a first member 74 that tends to rotate the first member 74 toward one side in a circumferential direction relative to a second member 75, and a rotation transmission state switching device 12 prevents the first member 74 from rotating toward the one side in the circumferential direction relative to the second member 75, executes, in response to a mode change of the two-speed transmission 3 by the reduction ratio change function, a pre-shift process in which a regenerative torque of a drive motor 2 is reduced while increasing a braking force of a friction brake device 5 before one of a first engaging pawl 94 or a second engaging pawl 97, which extends from a base portion 93 (or 96) pivotally supported by the second member 75 toward the other side in the circumferential direction, is pressed in a radial direction or an axial direction by protruding portions 100 to retract it from engaging recessed portions 77.

## Description

### TECHNICAL FIELD

The present disclosure relates to a drive apparatus for electric vehicle that increases output torque of an electric motor (decelerates rotation) and transmits the increased torque to drive wheels.

### BACKGROUND ART

In response to a recent trend toward reducing fossil fuel consumption, research into electric vehicles and hybrid vehicles has progressed and some of these vehicles are already being implemented. Unlike internal combustion engines, which are powered by directly burning fossil fuels, electric motors, which are a power source for electric vehicles and hybrid vehicles, have output shaft torque and rotational speed characteristics that are favorable for automotive use (typically, maximum torque is generated at startup), so there is no need to install a transmission like in general automobiles that use internal combustion engines as their drive source.

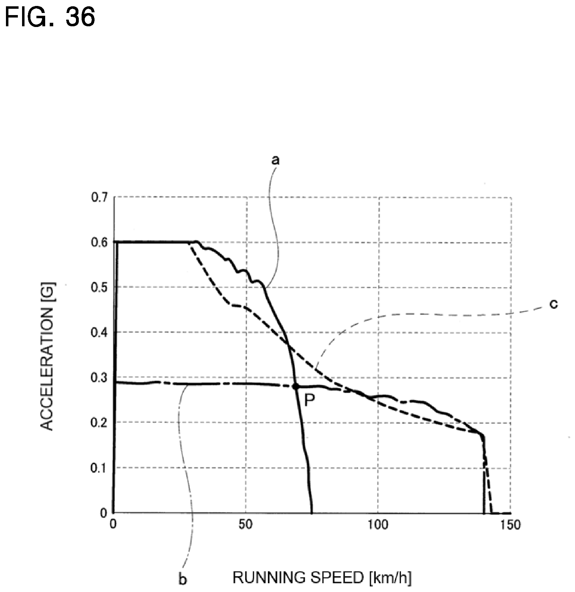

However, even in a case in which an electric motor is used as the drive source, the provision of a transmission can improve acceleration performance and high-speed performance. More specifically, by providing a transmission, a relationship between a vehicle's running speed and acceleration can be made smoother, similar to that of an automobile equipped with a gasoline engine and a transmission in a power transmission system. This aspect will be described with reference to FIG. 36.

For example, if a power transmission apparatus with a large reduction ratio is arranged between an output shaft of an electric motor and an input portion of a differential gear connected to drive wheels, a relationship between acceleration (G) and driving speed (km/h) of the electric vehicle is as indicated by a solid line a in FIG. 36. In other words, the acceleration performance at low speeds is excellent, but high-speed driving is not possible. On the other hand, in a case where a power transmission apparatus with a small reduction ratio is arranged between the output shaft and the input portion, the relationship will be as indicated by the chain line b in FIG. 36. In other words, high-speed driving becomes possible, but acceleration performance at low speeds is impaired.

In contrast to this, in a case where a transmission is provided between the output shaft and the input portion and the reduction ratio of the transmission is changed according to the vehicle speed, a characteristic can be obtained in which a portion of the solid line a to the left of point P and a portion of the dotted line b to the right of point P are continuous. This characteristic is almost the same as that of a gasoline engine vehicle with a similar output, indicated by the dashed line c in FIG. 36, and it can be seen that in terms of acceleration performance and high-speed performance, it is possible to obtain performance equivalent to that of a gasoline engine vehicle with a transmission in the power transmission system thereof.

WO 2023/135870 discloses a structure of a drive apparatus for electric vehicle in which output torque of a drive motor, which is a drive source, is increased by a two-speed transmission equipped with a friction engagement device that can switch between a connected mode and a disconnected mode, and a rotation transmission state switching device that can switch among a locked mode, a one-way clutch mode, and a free mode, and then transmitted to a differential gear. In this drive apparatus for electric vehicle, by switching the mode of the friction engagement device and the mode of the rotation transmission state switching device, it is possible to switch the two-speed transmission between a low reduction ratio mode, in which the reduction ratio between the input member and the output member is small, and a high reduction ratio mode, in which the reduction ratio is larger than that in the low reduction ratio mode.

More specifically, by switching the electric friction clutch device to the disconnected mode and the rotation transmission state switching device to the locked mode, the two-speed transmission can be switched to the high reduction ratio mode, and by switching the electric friction clutch device to the connected mode and the rotation transmission state switching device to the free mode, the two-speed transmission can be switched to the low reduction ratio mode.

In the drive apparatus for electric vehicle described in WO 2023/135870, when switching from the high reduction ratio mode to the low reduction ratio mode during normal forward driving (powered driving), the rotation transmission state switching device is switched from the locked mode to the one-way clutch mode, and then the friction engagement device is switched from the disconnected mode to the connected mode. Thus, shock (shift shock) is prevented from occurring when the reduction ratio is changed.

The rotation transmission state switching device of this drive apparatus for electric vehicle includes a first member, a second member, a mode selecting member, first pawl members, second pawl members, first pawl biasing members, and second pawl biasing members.

The first member has engaging recessed portions at a plurality of locations in a circumferential direction on an outer circumferential surface thereof.

The second member is arranged around the first member and coaxially with the first member.

The mode selecting member has a plurality of protruding portions at a plurality of locations in the circumferential direction, the protruding portions protruding in a radial direction, and rotates in conjunction with the rotation of a drive cam for switching the friction clutch device.

The first pawl member has a first base portion pivotally supported by the second member, and a first engaging pawl extending from the first base portion toward a first side in the circumferential direction.

The second pawl member has a second base portion pivotally supported by the second member, and a second engaging pawl extending from the second base portion toward a second side in the circumferential direction.

The first pawl biasing member elastically bias the first engaging pawl in a direction to engage with the engaging recessed portion.

The second pawl biasing member elastically bias the second engaging pawl in the direction to engage with the engaging recessed portion.

The rotation transmission state switching device switches between the free mode, the locked mode, and the one-way clutch mode in accordance with the rotation of the mode selecting member.

More specifically, when the rotation transmission state switching device is switched to the free mode, the mode selecting member is rotated and the protruding portions push the first engaging pawl and the second engaging pawl outward in the radial direction and retract them from the engaging recessed portions, thereby allowing rotation of the first member relative to the second member regardless of the relative rotation direction between the first member and the second member.

In a case in which the rotation transmission state switching device is switched to the locked mode, the protruding portions are positioned at positions offset in the circumferential direction from the first engaging pawl and the second engaging pawl, and the first engaging pawl and the second engaging pawl are engaged with the engaging recessed portions, thereby preventing rotation of the first member relative to the second member regardless of the relative rotation direction between the first member and the second member.

When the rotation transmission state switching device is switched to the one-way clutch mode, the protruding portions push only the second engaging pawl outward in the radial direction and retract the second engage pawls from the engaging recessed portions, thereby allowing only rotation of the first member in a specified direction relative to the second member and preventing rotation in the direction opposite to the specified direction.

### CITATION LIST

### PATENT LITERATURE

Patent Literature 1: WO 2023/135870

### SUMMARY OF INVENTION

### TECHNICAL PROBLEM

In the drive apparatus for electric vehicle described in WO 2023/135870, in a case of switching from the high reduction ratio mode to the low reduction ratio mode during regenerative driving in which a regenerative torque acts on the drive motor, it is necessary to switch the rotation transmission state switching device from the locked mode to the one-way clutch mode and then to the free mode.

Here, in a case in which a vehicle is regeneratively driving forward in the high reduction ratio mode, a torque is applied to the first member in a direction opposite to the predetermined direction, that is, in a direction in which rotation is prevented by the rotation transmission state switching device. Therefore, side surfaces in the circumferential direction of the engaging recessed portions provided in the first member are pressed strongly against tip end portions of the first engaging pawl. Therefore, in order to switch the rotation transmission state switching device from the locked mode to the one-way clutch mode, a force required to press the first engaging pawl outward in the radial direction by the protruding portions may become excessive, and in severe cases, it may be impossible to switch the mode of the rotation transmission state switching device.

If a high-output motor is used as a shift motor that rotates and drives the drive cam, the mode of the rotation transmission state switching device can be switched regardless of the torque applied to the first member during the forward regenerative driving in the high reduction ratio mode; however, this creates a problem of the shift motor becoming larger.

In view of the above-mentioned circumstances, an object of the technique according to the present disclosure is to provide a structure for a drive apparatus for electric vehicle capable of switching a reduction ratio between two levels, high and low, and that enables smooth mode switching when switching from a low reduction ratio mode to a high reduction ratio mode during regenerative driving in which a regenerative torque acts on a drive motor.

### SOLUTION TO PROBLEM

A drive apparatus for electric vehicle according to one aspect of the present disclosure includes a drive motor, a two-speed transmission, a torque transmission mechanism, a friction brake device, and a control device.

The drive motor has a motor output shaft.

The two-speed transmission includes an input member, an output member, a rotating member, an electric friction clutch device, and a rotation transmission state switching device.

The input member is capable of transmitting torque between the input member and the motor output shaft.

The output member is supported so as to be rotatable relative to the input member.

The rotating member is supported so as to be rotatable relative to the input member and the output member.

The electric friction clutch device includes a first clutch member, a second clutch member, a friction engagement portion, a cam device, and an electric actuator.

The first clutch member rotates integrally with the rotating member, or is configured by the rotating member.

The second clutch member is supported coaxially with the first clutch member so as to be capable of relative rotation with respect to the first clutch member, and rotates integrally with the input member or the output member, or is configured by the input member or the output member.

The friction engagement portion has at least one first friction plate and at least one second friction plate supported to allow relative displacement therebetween in an axial direction, and is provided between the first clutch member and the second clutch member.

The cam device has a drive cam and a driven cam supported so as to be capable of relative rotation and displacement in the axial direction relative to the drive cam. The cam device expand or contract a distance in the axial direction between the drive cam and the driven cam as the drive cam rotates.

The electric actuator has a shift motor and a reducer, the shift motor rotationally driving the drive cam through the reducer.

The electric friction clutch device is configured to switch modes thereof based on expansion and contraction of a dimension in the axial direction of the cam device between a connected mode in which torque is transmitted between the first clutch member and the second clutch member by pressing the at least one first friction plate and the at least one second friction plate against each other, and a disconnected mode in which torque is not transmitted between the first clutch member and the second clutch member by releasing a force pressing the at least one first friction plate and the at least one second friction plate against each other.

The rotation transmission state switching device includes a first member, a second member, a mode selecting member, a first pawl member, a second pawl member, a first pawl biasing member, and a second pawl biasing member.

The first member has engaging recessed portions at a plurality of locations in a circumferential direction.

The second member is arranged coaxially with the first member.

The mode selecting member has protruding portions that protrude in a radial direction or the axial direction at a plurality of locations in the circumferential direction, and rotates or displaces in the axial direction as the drive cam rotates.

The first pawl member has a first base portion pivotally supported by the second member, and a first engaging pawl extending from the first base portion toward a first side in the circumferential direction.

The second pawl member has a second base portion pivotally supported by the second member, and a second engaging pawl extending from the second base portion toward a second side in the circumferential direction.

The first pawl biasing member elastically biases the first engaging pawl in a direction to engage with the engaging recessed portions.

The second pawl biasing member elastically biases the second engaging pawl in a direction to engage with the engaging recessed portions.

One member of the first member and the second member rotates integrally with the rotating member, or is configured by the rotating member. In addition, the other member of the first member and the second member is supported so as not to be rotatable relative to a stationary portion that does not rotate even during use.

The rotation transmission state switching device is configured to switch modes thereof between at least one mode of a locked mode and a one-way clutch mode, and a free mode.

The locked mode, by the protruding portions being positioned at positions offset in the circumferential direction or the axial direction from the first engaging pawl and the second engaging pawl so as to engage the first engaging pawl and the second engaging pawl with the engaging recessed portions, prevents relative rotation between the first member and the second member regardless of a relative rotation direction between the first member and the second member.

In the one-way clutch mode, the protruding portions press only one engaging pawl of the first engaging pawl and the second engaging pawl in the radial direction or the axial direction so as to retract the one engaging pawl from the engaging recessed portions and engage the other engaging pawl of the first engaging pawl and the second engaging pawl with the engaging recessed portions, allows only rotation of the one member in a predetermined direction relative to the other member and preventing rotation of the one member in a direction opposite to the predetermined direction relative to the other member.

The free mode allows relative rotation between the first member and the second member regardless of the relative rotation direction between the first member and the second member by the protruding portions pressing the first engaging pawl and the second engaging pawl in the radial direction or the axial direction and retract both the first engaging pawl and the second engaging pawl from the engaging recessed portions.

The torque transmission mechanism transmits torque between the output member and drive wheels.

The friction brake device is arranged between the output member and the drive wheels and brakes rotation of the drive wheels.

The control device has a reduction ratio switching function and a cooperative control function.

The reduction ratio switching function switches the modes of the friction engagement portion and the modes of the rotation transmission state switching device based on the electric actuator rotationally driving the drive cam, thereby switching the two-speed transmission between a high reduction ratio mode in which a reduction ratio between the input member and the output member is large, and a low reduction ratio mode in which the reduction ratio between the input member and the output member is small.

The cooperative control function, when torque is passing through the two-speed transmission from a side of the output member to a side of the input member, and torque is applied to the one member to rotate the one member toward one side in the circumferential direction relative to the other member, and the rotation transmission state switching device prevents the one member from rotating toward the one side in the circumferential direction relative to the other member, executes a pre-shift process reducing a regenerative torque of the drive motor and increasing a braking force by the friction brake device, before retracting one engaging pawl of the first engaging pawl and the second engaging pawl that extends toward the other side in the circumferential direction from the first base portion or the second base portion pivotally supported by the second member from the engaging recessed portions by pressing the one engaging pawl in the radial direction or the axial direction by the protruding portions in response to mode switching of the two-speed transmission by the reduction ratio switching function.

In the drive apparatus for electric vehicle according to one aspect of the present disclosure, the regenerative torque of the drive motor may be reduced to zero in the pre-shift process.

In the drive apparatus for electric vehicle according to one aspect of the present disclosure, the two-speed transmission may be configured to be switchable to the locked mode. In this case, the reduction ratio switching function may switch the two-speed transmission to the high reduction ratio mode by switching the electric friction clutch device to the disconnected mode and the rotation transmission state switching device to the locked mode, and may switch the two-speed transmission to the low reduction ratio mode by switching the electric friction clutch device to the connected mode and the rotation transmission state switching device to the free mode.

In the drive apparatus for electric vehicle according to one aspect of the present disclosure, the two-speed transmission may be configured to be switchable to the one-way clutch mode. In this case, the drive apparatus for electric vehicle may execute the cooperative control function while the two-speed transmission is being switched from the high reduction ratio mode to the low reduction ratio mode and before the rotation transmission state switching device is switched from the locked mode to the one-way clutch mode.

In the drive apparatus for electric vehicle according to one aspect of the present disclosure, the cooperative control function may perform the pre-shift process, and retract the one engaging pawl from the engaging recessed portions by pressing the one engaging pawl in the radial direction or the axial direction by the protruding portions, and then perform an inertia process increasing a drive torque of the drive motor in the same direction as the regenerative torque acting on the drive motor so as to promote a decrease in rotational speed of the motor output shaft, and then, when the rotational speed of the motor output shaft begins to decrease, reducing the drive torque of the drive motor.

In the drive apparatus for electric vehicle according to one aspect of the present disclosure, the cooperative control function, after performing the inertia process, may perform a shift completion process adjusting a fastening force of the friction engagement portion to a magnitude such that a torque that can be transmitted without slippage between the at least one first friction plate and the at least one second friction plate is equal to or greater than a torque that passes through the friction engagement portion after the two-speed transmission has completely switched to the low reduction ratio mode, and then increasing the regenerative torque of the drive motor while reducing the braking force of the friction brake device.

In the drive apparatus for electric vehicle according to one aspect of the present disclosure, the electric friction clutch device may include a return spring that elastically biases the at least one first friction plate and the at least one second friction plate in directions away from each other.

In the drive apparatus for electric vehicle according to one aspect of the present disclosure, the electric friction clutch device may further include an elastic biasing mechanism provided between the first clutch member or the second clutch member and the friction engagement portion and be configured to elastically bias the at least one first friction plate and the at least one second friction plate in directions pressing them against each other.

Alternatively, in the drive apparatus for electric vehicle according to one aspect of the present disclosure, the electric friction clutch device may further include an elastic biasing mechanism arranged between the friction engagement portion, and the driven cam and be configured to elastically bias the friction engagement portion and the driven cam in directions away from each other.

In the drive apparatus for electric vehicle according to one aspect of the present disclosure, the two-speed transmission may further include a planetary gear mechanism including a sun gear, a ring gear arranged coaxially around the sun gear, a carrier supported to be rotatable relative to the sun gear and the ring gear, and a plurality of planetary gears engaged with the sun gear and the ring gear and supported by the carrier to be rotatable about their own central axes.

In this case, an input element that is one element of the sun gear, the ring gear, and the carrier is connected to the input member so as to rotate integrally with the input member.

An output element that is another element of the sun gear, the ring gear, and the carrier which is apart from the input element, is connected to the output member so as to rotate integrally with the output member.

A rotating element that is a remaining element of the sun gear, the ring gear, and the carrier which is apart from the input element and the output element, is connected to the rotating member so as to rotate integrally with the rotating member.

### ADVANTAGEOUS EFFECTS OF INVENTION

With the drive apparatus for electric vehicle according to one aspect of the present disclosure, the modes of the rotation transmission state switching device can be smoothly switched even during regenerative driving in which regenerative torque acts on the drive motor.

### BRIEF DESCRIPTION OF DRAWINGS

[FIG. 1] FIG. 1 is a block diagram illustrating a drive apparatus for electric vehicle of a first example of an embodiment according to the present disclosure.
[FIG. 2] FIG. 2 is a cross-sectional view that schematically illustrates the first example of the drive apparatus for electric vehicle.
[FIG. 3] FIG. 3(A) is a diagram illustrating a torque transmission path in a low reduction ratio mode of the two-speed transmission in the first example, and FIG. 3(B) is a diagram illustrating the torque transmission path in a high reduction ratio mode of the two-speed transmission in the first example.
[FIG. 4] FIG. 4 is a perspective view illustrating the two-speed transmission in the first example.
[FIG. 5] FIG. 5 is a cross-sectional view illustrating the two-speed transmission in the first example.
[FIG. 6] FIG. 6 is a perspective view illustrating the two-speed transmission with a planetary gear mechanism removed in the first example.
[FIG. 7] FIG. 7 is a cross-sectional view illustrating the two-speed transmission with the planetary gear mechanism removed in the first example.
[FIG. 8] FIG. 8 is an exploded perspective view illustrating the two-speed transmission with the planetary gear mechanism removed in the first example.
[FIG. 9] FIG. 9 is an exploded perspective view illustrating a worm and two support bearings removed from an electric friction clutch device of the two-speed transmission in the first example.
[FIG. 10] FIG. 10 is an exploded perspective view illustrating first friction plates and second friction plates removed from the electric friction clutch device in the first example.
[FIG. 11] FIG. 11 is an enlarged view of an X portion in FIG. 5.
[FIG. 12] FIG. 12 is a perspective view illustrating a drive cam removed from the electric friction clutch device in the first example.
[FIG. 13] FIG. 13 is an exploded perspective view illustrating a driven cam and rolling elements removed from the electric friction clutch device in the first example.
[FIG. 14] FIG. 14(A) is a perspective view illustrating a flange portion of a rotating member and a pressing member removed from the two-speed transmission in the first example, and FIG. 14(B) is an exploded perspective view illustrating the removed flange portion and pressing member.
[FIG. 15] FIGS. 15(A) to 15(D) are schematic diagrams of a cam device of the electric friction clutch device as viewed from the outer side in the radial direction.
[FIG. 16] FIG. 16 is a perspective view of a rotation transmission state switching device of the two-speed transmission in the first example, as viewed from the other side in the axial direction.
[FIG. 17] FIG. 17 is an exploded perspective view of the rotation transmission state switching device in the first example.
[FIG. 18] FIG. 18 is an end view of the rotation transmission state switching device in the first example, as viewed from the other side in the axial direction with a cover body removed.
[FIG. 19] FIG. 19 is an enlarged view of the Y portion in FIG. 18.
[FIG. 20] FIG. 20(A) is a schematic diagram illustrating an engaging relationship between a first engaging pawl and a second engaging pawl, engaging recessed portions, and protruding portions in a free mode of the rotation transmission state switching device in the first example, FIG. 20(B) is a schematic diagram illustrating an engaging relationship in a locked mode, and FIG. 20(C) is a schematic diagram illustrating an engaging relationship in a one-way clutch mode.
[FIG. 21] FIG. 21 is a diagram schematically illustrating modes of the electric friction clutch device and modes of the rotation transmission state switching device in the two-speed transmission in the first example.
[FIG. 22] FIGS. 22(A) and 22(B) are diagrams illustrating a relationship between a rotational angle of the drive cam and an output torque and current value of a shift motor when the electric friction clutch device is switched from a connected mode to a disconnected mode in the first example, where FIG. 22(A) illustrates a case when the first friction plates and the second friction plates are new and not worn, and FIG. 22(B) illustrates a case when the first friction plates and the second friction plates have worn significantly.
[FIG. 23] FIG. 23 is a cross-sectional view illustrating a state in which the electric friction clutch device in the first example is switched to the connected mode.
[FIG. 24] FIG. 24 is a cross-sectional view illustrating a state in which a pressing member and a piston are in contact with each other during switching of the electric friction clutch device from the connected mode to the disconnected mode, in the first example.
[FIG. 25] FIG. 25 is a cross-sectional view illustrating a state in which the electric friction clutch device in the first example is switched to the disconnected mode.
[FIG. 26] FIG. 26 is a flowchart showing the operation in the first example when the two-speed transmission is switched from a high reduction ratio mode to a low reduction ratio mode during normal forward driving.
[FIG. 27] FIG. 27 is a diagram illustrating a time variation of each parameter when the two-speed transmission is switched from the high reduction ratio mode to the low reduction ratio mode during normal forward driving in the first example.
[FIG. 28] FIG. 28 is a flowchart showing the operation in the first example when the two-speed transmission is switched from the high reduction ratio mode to the low reduction ratio mode during regenerative driving in which a regenerative torque is acting on a drive motor.
[FIG. 29] FIG. 29 is a diagram illustrating a time variation of each parameter when the two-speed transmission is switched from the high reduction ratio mode to the low reduction ratio mode during the regenerative driving in the first example.
[FIG. 30] FIG. 30 is a cross-sectional view illustrating a part of a two-speed transmission of a comparative example.
[FIG. 31] FIG. 31 is a diagram that schematically illustrates an engaged state and a disengaged state of a first friction engagement device and a second friction engagement device in the two-speed transmission of the comparative example.
[FIG. 32] FIG. 32 is a diagram corresponding to FIG. 21 and illustrates a two-speed transmission according to a modification of the first example.
[FIG. 33] FIG. 33 is a cross-sectional view schematically illustrating a drive apparatus for electric vehicle according of a second example of an embodiment according to the present disclosure.
[FIG. 34] FIG. 34(A) is a diagram illustrating a torque transmission path in the low reduction ratio mode of a two-speed transmission of a second example of the drive apparatus for electric vehicle, and FIG. 34(B) is a diagram illustrating a torque transmission path in the high reduction ratio mode of the two-speed transmission in the second example.
[FIG. 35] FIG. 35 is a cross-sectional view illustrating the two-speed transmission in the second example.
[FIG. 36] FIG. 36 is a diagram for explaining the effect of incorporating a transmission into a drive device that uses an electric motor as a drive source.

### DESCRIPTION OF EMBODIMENTS

### [First Example]

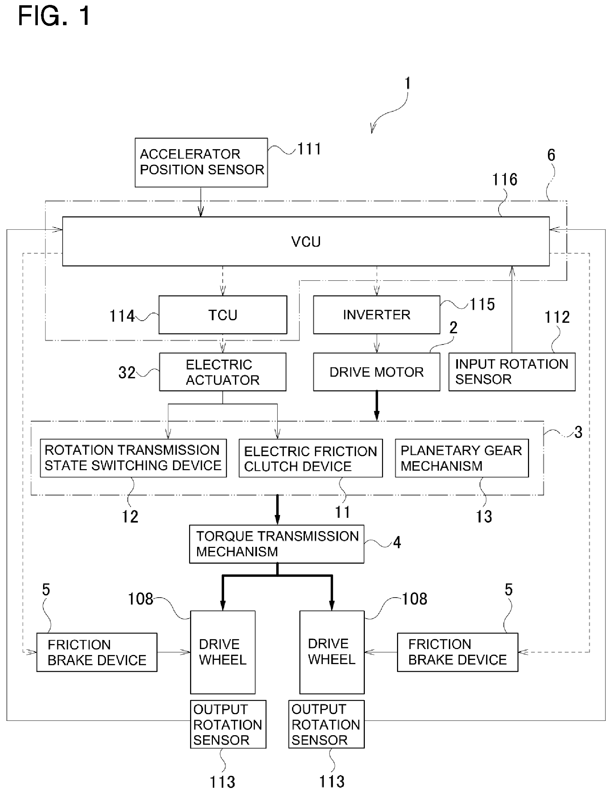

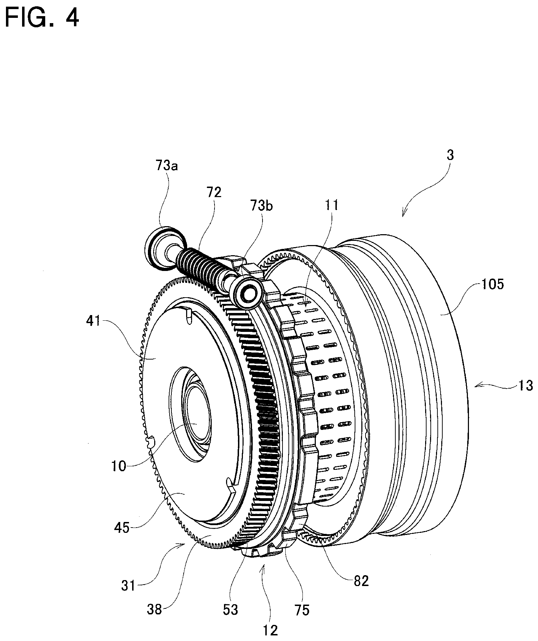

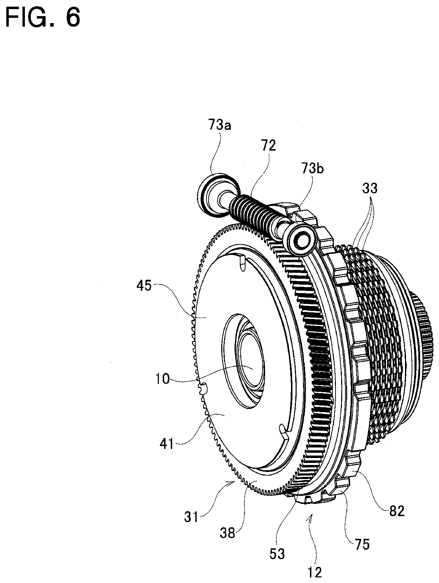

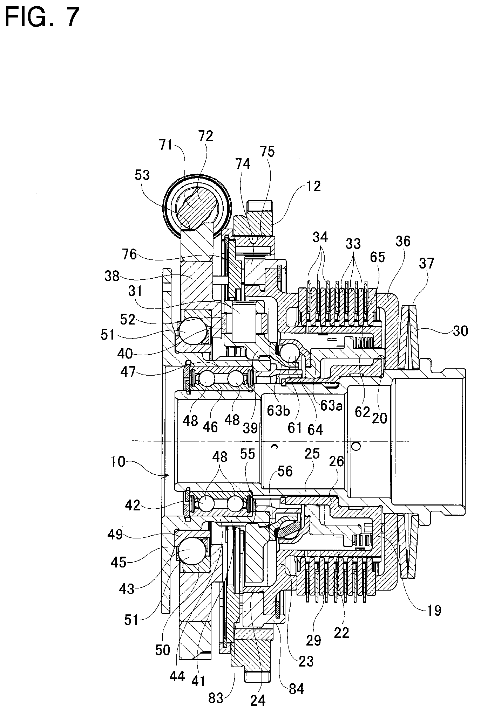

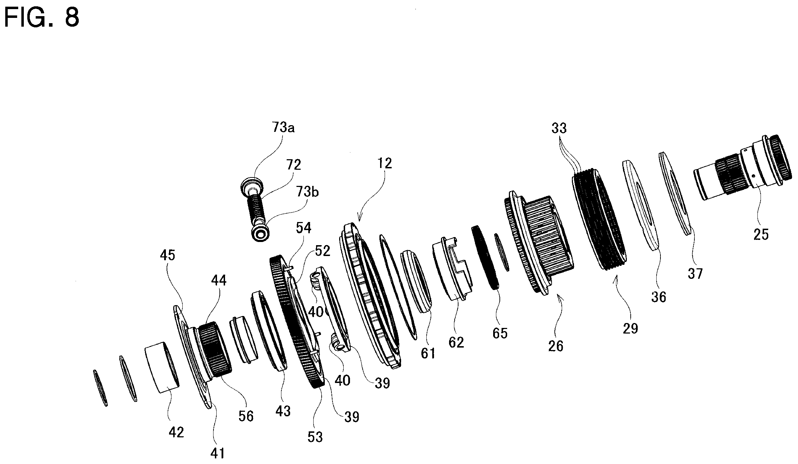

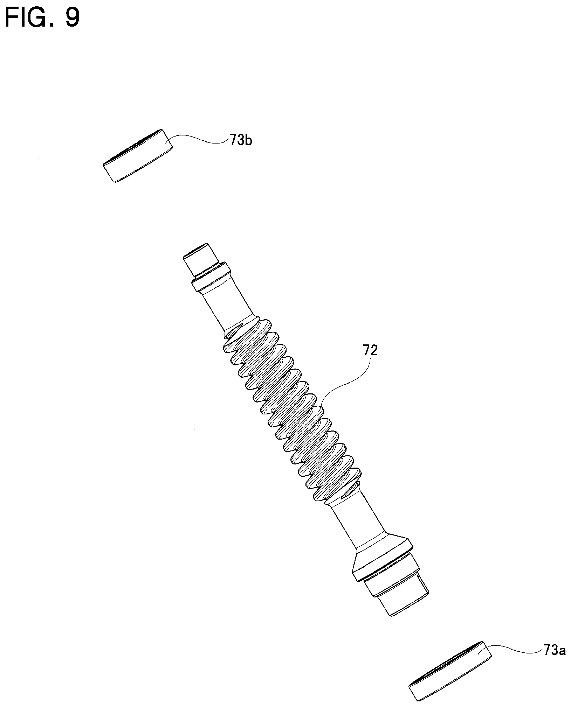

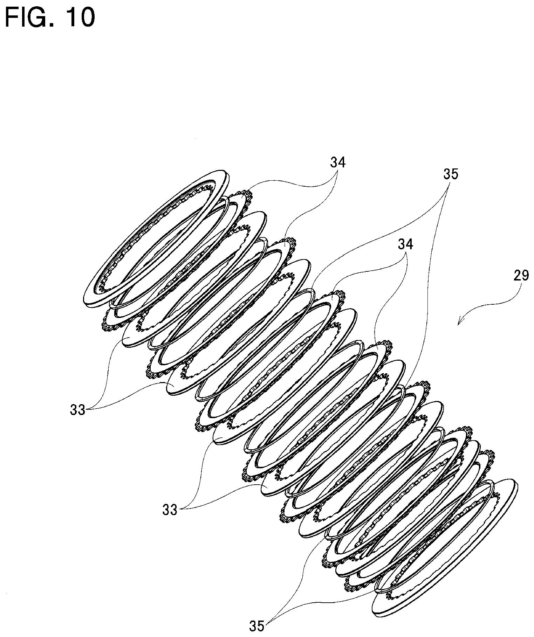

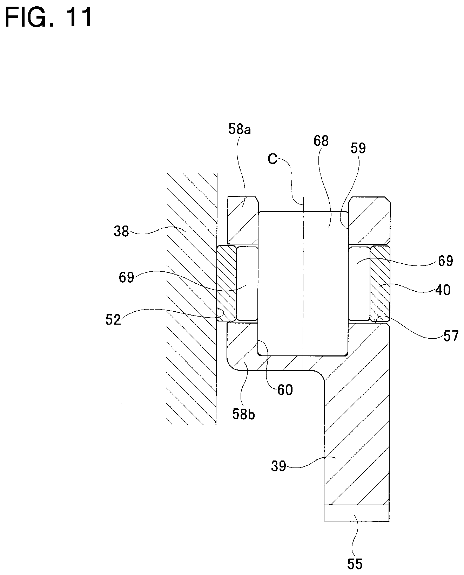

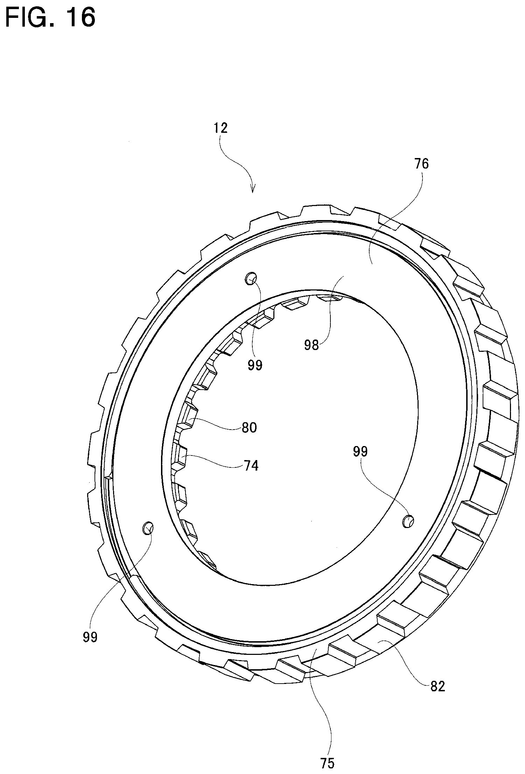

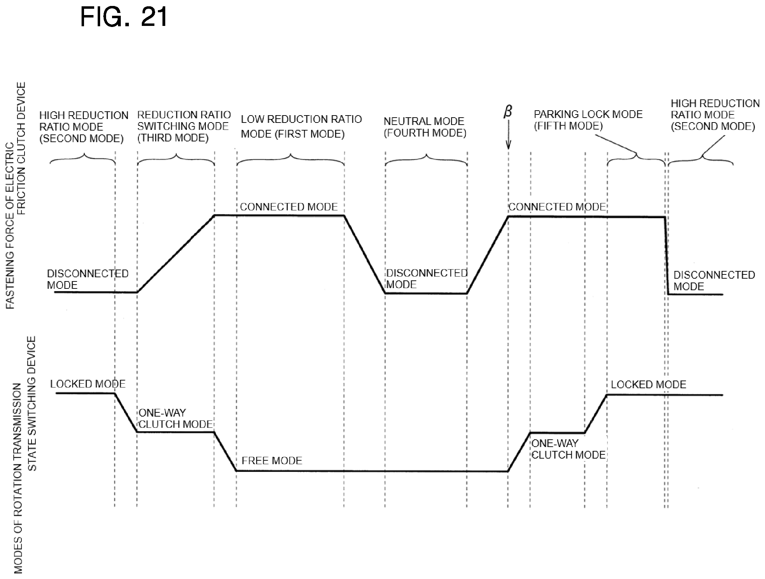

A first example of an embodiment according to the present disclosure will be described with reference to FIGS. 1 to 29.

A drive apparatus for electric vehicle 1 includes a drive motor 2, a two-speed transmission 3, a torque transmission mechanism 4, a friction brake device 5, and a control device 6.

The drive motor 2 has a motor output shaft 7.

Note that a positive value of a torque (T₂) of the drive motor 2 means that the torque (T₂) is an output torque (drive torque, power torque), and a negative value of the torque (T₂) means that the torque (T₂) is a regenerative torque. In the following description, the torque (T₂) having a positive value may be referred to as an output torque, and the torque (T₂) having a negative value may be referred to as a regenerative torque.

The two-speed transmission 3 includes an input member 8, an output member 9, a rotating member 10, an electric friction clutch device 11, and a rotation transmission state switching device 12.

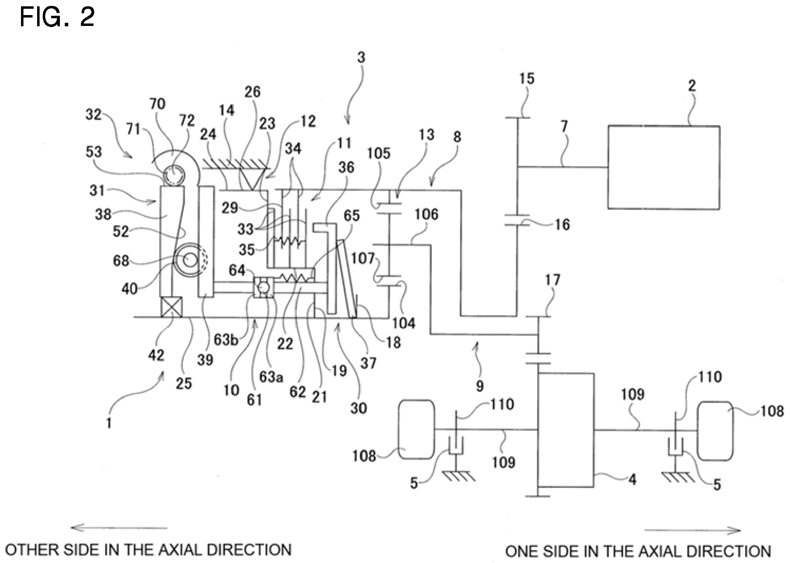

With respect to the two-speed transmission 3, an axial direction, a radial direction, and a circumferential direction refer to an axial direction, a radial direction, and a circumferential direction of the input member 8 unless otherwise specified. The axial direction, the radial direction, and the circumferential direction of the input member 8 coincide with the axial direction, the radial direction, and the circumferential direction of the output member 9, and also coincide with the axial direction, the radial direction, and the circumferential direction of the rotating member 10. Furthermore, one side in the axial direction refers to the right side in FIGS. 2, 3(A), 3(B), 5, 7, 11, 15(A) to 15(D), and 23 to 25, and the other side in the axial direction refers to the left side in FIGS. 2, 3(A), 3(B), 5, 7, 11, 15(A) to 15(D), and 23 to 25.

The two-speed transmission 3 is configured to be able to switch between a high reduction ratio mode in which a reduction ratio between the input member 8 and the output member 9 is large and a low reduction ratio mode in which the reduction ratio between the input member 8 and the output member 9 is small by switching a torque transmission path by switching modes of the electric friction clutch device 11 and modes of the rotation transmission state switching device 12. In the present example, the two-speed transmission 3 switches between the high reduction ratio mode and the low reduction ratio mode by switching the modes of the electric friction clutch device 11 and the modes of the rotation transmission state switching device 12, thereby switching the torque transmission path passing through a planetary gear mechanism 13.

The input member 8 is capable of transmitting torque between the input member 8 and the motor output shaft 7. More specifically, the input member 8 has an input gear 16 at an end portion on the one side in the axial direction thereof that engages with a drive gear 15 provided on the motor output shaft 7 of the drive motor 2.

In the present example, the input member 8 is rotatably supported through a rolling bearing or the like (not illustrated) by a stationary portion 14 that does not rotate even during use and is constituted by a housing that accommodates the two-speed transmission 3. In addition, the input member 8 is configured to be cylindrical (hollow).

The output member 9 is supported so as to be rotatable relative to the input member 8.

In the present example, the output member 9 is arranged coaxially with the input member 8 and is supported on an inner side in the radial direction of the cylindrical input member 8 through a rolling bearing or the like (not illustrated) so as to be able to rotate relative to the input member 8. Moreover, the output member 9 also has an output gear 17 at an end portion on the one side in the axial direction.

The rotating member 10 is supported so as to be rotatable relative to the input member 8 and the output member 9.

In the present example, the rotating member 10 is arranged coaxially with the input member 8 and the output member 9, and is rotatably supported relative to the stationary portion 14 through the rotation transmission state switching device 12, a cam device 31 of the electric friction clutch device 11, and a radial bearing 42 for rotatably supporting a drive cam 38 of the cam device 31 relative to the rotating member 10.

More specifically, the rotating member 10 has a small-diameter flange portion 18 in an intermediate portion in the axial direction, the small-diameter flange portion 18 protruding outward in the radial direction, and also has a flange portion 19 in a portion located farther on the other side in the axial direction (the left side in FIG. 2) than the small diameter flange portion 18, the flange portion 19 protruding outward in the radial direction. The flange portion 19 has a first circular ring portion 21 in a form of a hollow circular plate, a first cylindrical portion 22 bent from an outer end portion in the radial direction of the first circular ring portion 21 toward the other side in the axial direction, a second circular ring portion 23 in a form of a hollow circular plate bent from an outer end portion of the other side in the axial direction of the first cylindrical portion 22 toward the outer side in the radial direction, and a second cylindrical portion 24 bent from an outer end portion in the radial direction of the second circular ring portion 23 toward the other side in the axial direction. The first circular ring portion 21 has partially arc-shaped through holes 20 at a plurality of locations in an intermediate portion in the radial direction for inserting partial cylindrical portions 67 of a pressing member 62 of the electric friction clutch device 11.

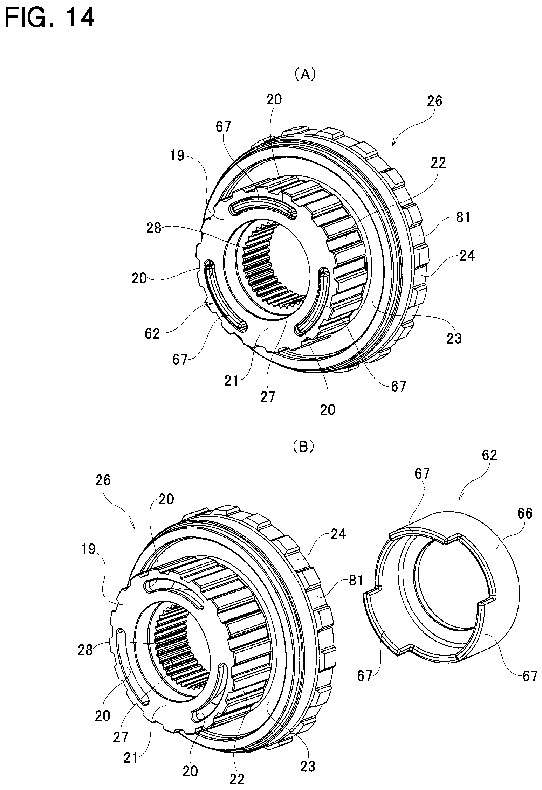

In the present example, the rotating member 10 is configured by externally fastening a stepped cylindrical member 26 to a shaft member 25 having a small-diameter flange portion 18. In other words, as illustrated in FIG. 14(A) and 14(B), the stepped cylindrical member 26 has a flange portion 19 and a small-diameter cylindrical portion 27 that is bent from an inner end portion in the radial direction of the first circular ring portion 21 of the flange portion 19 toward the other side in the axial direction. The rotating member 10 is formed by supporting and fixing the stepped cylindrical member 26 to the shaft member 25 by, for example, spline-engaging a female spline portion 28 provided on an inner circumferential surface of the small-diameter cylindrical portion 27 with a male spline portion provided on an outer circumferential surface of the shaft member 25. However, the rotating member may be configured by joining and fixing the stepped cylindrical member and the shaft member by press fitting, welding, or the like.

The electric friction clutch device 11 has a first clutch member, a second clutch member, a friction engagement portion 29, a cam device 31, and an electric actuator 32, and is provided between the rotating member 10 and the input member 8 or the output member 9. The electric friction clutch device 11 switches between a connected mode in which torque is transmitted between the first clutch member and the second clutch member, and a disconnected mode in which torque is not transmitted between the first clutch member and the second clutch member.

The first clutch member is connected to the rotating member 10 so as to rotate integrally therewith, or is configured by the rotating member 10. In the present example, the first clutch member is configured by the rotating member 10.

The second clutch member is supported coaxially with the first clutch member so as to be capable of relative rotation with respect to the first clutch member. In addition, the second clutch member is connected to the input member 8 or the output member 9 so as to rotate integrally therewith, or is configured by the input member 8 or the output member 9. In the present example, the second clutch member is configured by the input member 8.

The friction engagement portion 29 has at least one first friction plate 33 and at least one second friction plate 34 supported to allow relative displacement in the axial direction, and is provided between the rotating member 10, which is the first clutch member, and the input member 8, which is the second clutch member.

In the present example, at least one first friction plate 33 is configured by a plurality of first friction plates 33, and at least one second friction plate 34 is configured by a plurality of second friction plates 34. More specifically, the friction engagement portion 29 is configured by a multi-plate clutch in which the first friction plates 33 supported by the rotating member 10 and the second friction plates 34 supported by the input member 8 are alternately stacked.

The first friction plates 33 are supported on an outer circumferential surface of the first cylindrical portion 22 so as to be capable of displacement in the axial direction but not capable of relative rotation with respect to the first cylindrical portion 22.

The second friction plates 34 are supported on an inner circumferential surface of an end portion on the other side in the axial direction of the input member 8 so as to be capable of displacement in the axial direction but not capable of relative rotation with respect to the input member 8.

The cam device 31 has a drive cam 38 and a driven cam 39 supported so as to be capable of relative rotation with respect to the drive cam 38 and capable of relative displacement in the axial direction. The cam device 31 increases or decreases a distance in the axial direction between the drive cam 38 and the driven cam 39 as the drive cam 38 rotates.

The cam device 31 can have any configuration as long as the cam device 31 can expand and contract the distance in the axial direction between the drive cam 38 and the driven cam 39, that is, the axial dimension of the cam device 31, as the drive cam 38 rotates. For example, the cam device may have a configuration in which the drive cam surface on the drive cam and the driven cam surface on the driven cam slide directly against each other, a configuration in which multiple rolling elements are sandwiched between the drive cam surface on the drive cam and the driven cam surface on the driven cam, or a configuration in which multiple rolling elements supported on one of the drive cam and the driven cam are brought into rolling contact with the cam surface on the other of the drive cam and the driven cam.

In the present example, in addition to the drive cam 38 and the driven cam 39, the cam device 31 further has a plurality of rolling elements 40 that are supported by the driven cam 39 and that come in rolling contact with a drive cam surface 52 provided on the drive cam 38.

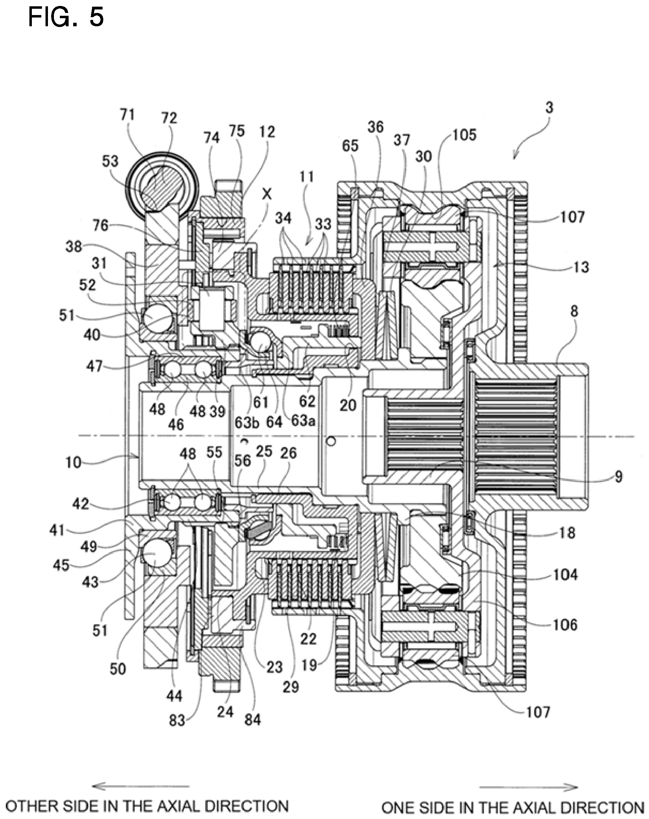

The drive cam 38 is supported relative to the rotating member 10 so as to be rotatable relative to the rotating member 10 and the input member 8 but not displaceable in the axial direction relative to the rotating member 10. More specifically, as illustrated in FIG. 5 and other figures, the drive cam 38 is supported by the rotating member 10 so as to be rotatable relative to the rotating member 10 through a cylindrical member 41, a radial bearing 42, and an angular ball bearing 43. Note that in FIGS. 2 to 3(B), the cylindrical member 41 and the angular ball bearing 43 are omitted from the illustration.

The cylindrical member 41 has a cylindrical portion 44 and an outward-facing flange portion 45 that is bent outward in the radial direction from an end portion on the other side in the axial direction of the cylindrical portion 44. The cylindrical member 41 is supported and fixed by the stationary portion 14 by screwing the outward-facing flange portion 45 to the stationary portion 14.

The radial bearing 42 has an inner ring 46 externally fitted and fixed to an end portion on the other side in the axial direction of the rotating member 10, an outer ring 47 internally fitted and fixed to the cylindrical portion 44 of the cylindrical member 41, and a plurality of rolling elements 48 arranged so as to be able to freely roll between the inner ring 46 and the outer ring 47. In the illustrated example, the radial bearing 42 is configured as a double-row deep groove ball bearing that uses balls as the rolling elements 48. However, the radial bearing is not particularly limited as long as it enables relative rotation between the first member and the cam device and can support a biasing force in the axial direction from an elastic biasing mechanism, and can be configured, for example, as a deep groove ball bearing, a radial angular contact ball bearing, or a radial tapered roller bearing.

The angular ball bearing 43 has an inner ring 49 externally fitted and fixed to the outside of the cylindrical portion 44 of the cylindrical member 41, an outer ring 50 internally fitted and fixed to the inside of the drive cam 38, and a plurality of balls 51 arranged so as to be able to freely roll between the inner ring 49 and the outer ring 50.

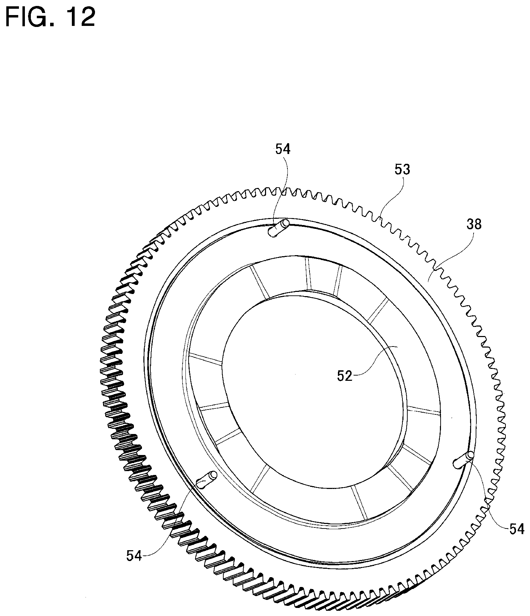

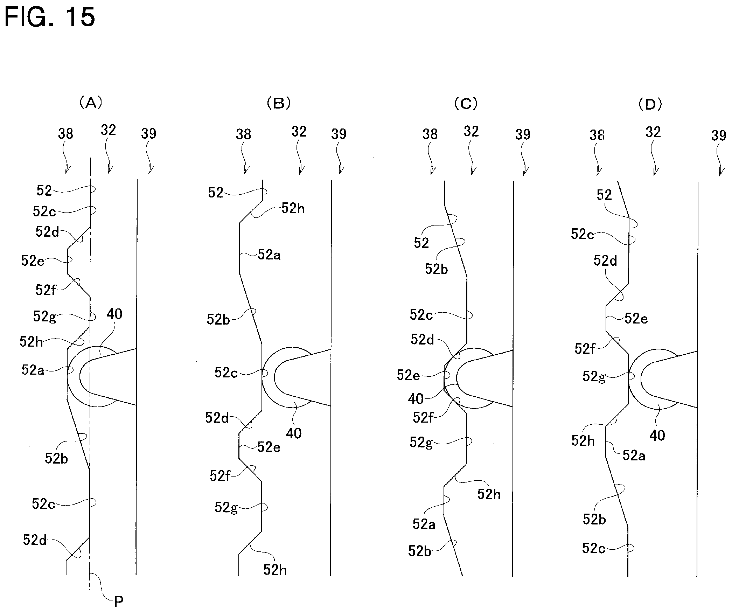

As illustrated in FIG. 12, the drive cam 38 has a drive cam surface 52 on an inner side in the radial direction of one side surface in the axial direction, in which the same number of recessed portions and protruding portions are arranged alternately in the circumferential direction. The drive cam surface 52 is configured by arranging in the following order from top to bottom in Figs. 15(A) to 15(D): a first bottom portion 52a, a gentle inclined surface portion 52b, a first flat surface portion 52c, an inclined surface portion 52d, a second bottom portion 52e, a first medium inclined surface portion 52f, a second flat surface portion 52g, and a second medium inclined surface portion 52h, repeated the same number of times as the number of rolling elements 40 (three times in this example).

Of the drive cam surface 52, the first flat surface portions 52c and the second flat surface portions 52g are located at an endmost portion on the one side in the axial direction, that is, at tip-end portions of the protruding portions, and the first bottom portions 52a and the second bottom portions 52e are located at an endmost portion on the other side in the axial direction. The inclination angles of the first medium inclined surface portion 52f and the second medium inclined surface portion 52h relative to an imaginary plane P perpendicular to a central axis of the drive cam 38 are larger than that of the gentle inclined surface portion 52b relative to the imaginary plane P.

The inclination angle of the gentle inclined surface portion 52b and the inclination angles of the first medium inclined surface portion 52f and the second medium inclined surface portion 52h are all set to a magnitude that allows the rolling element 40 to move either by rolling down or by climbing up. In the present example, the first medium inclined surface portion 52f and the second medium inclined surface portion 52h are inclined in opposite directions and have the same inclination angle, but the inclination angles may be different from each other. In addition, in the present example, the inclination angle of the gentle inclined surface portion 52b is smaller than the inclination angle of the first medium inclined surface portion 52f and the second medium inclined surface portion 52h, but the inclination angle of the gentle inclined surface portion 52b and the inclination angle of the first medium inclined surface portion 52f and the second medium inclined surface portion 52h can also be made the same.

Note that the inclination angle of the inclined surface portion 52d with respect to the imaginary plane Pcan be set to any value as long as the rolling element 40 can ride up on the inclined surface portion 52d.

In the present example, the drive cam 38 has wheel teeth 53, which are helical gears, on an outer peripheral surface thereof, and also has pin portions 54 that protrude toward the one side in the axial direction at a plurality of locations in the circumferential direction (three locations in the illustrated example) in an intermediate portion in the radial direction of a side surface on the one side in the axial direction.

The driven cam 39 is arranged around the rotating member 10 so as to be displaceable only in the axial direction. In the present example, the driven cam 39 has a hollow circular plate shape and is supported against the stationary portion 14 so as to be movable in the axial direction. In the present example, a female spline portion 55 provided on an inner peripheral surface of the driven cam 39 is spline-engaged with a male spline portion 56 provided on an outer peripheral surface of a portion on the one side in the axial direction of the cylindrical portion 44 of the cylindrical member 41, thereby supporting the driven cam 39 against the stationary portion 14 so as to be displaceable in the axial direction. However, the support method of supporting the driven cam against the stationary portion is not particularly limited as long as the driven cam can be supported against the stationary portion so as to be displaceable only in the axial direction. For example, the driven cam can be supported against the stationary portion so as to be displaceable in the axial direction by a key engagement between a protruding portion provided on one of the driven cam and the stationary portion with a recessed groove provided on the other.

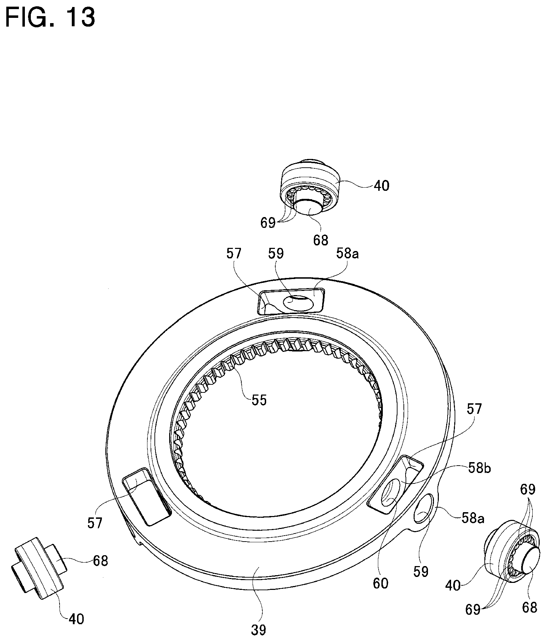

As illustrated in FIG. 13, the driven cam 39 has rectangular holes 57 that penetrate in the axial direction at a plurality of locations (three locations in the illustrated example) in the circumference direction of the an intermediate portion in the radial direction, and has support plate portions 58a, 58b that are approximately semicircular plates and that protrude from both sides in the radial direction of each rectangular hole 57 toward the other side in the axial direction. Of the support plate portions 58a, 58b, the support plate portions 58a on the outer side in the radial direction has a support hole 59 that is a circular hole that penetrates in the radial direction, and the inner support plate portion 58b on the inner side in the radial direction has a support recessed portion 60 with a circular opening on an outer surface in the radial direction thereof.

In the present example, the plurality of rolling elements 40 is configured by three rolling elements 40. However, the plurality of rolling elements 40 may be configured by two or four or more rolling elements 40.

Each of the rolling elements 40 has a cylindrical shape and is supported so as to be able to freely roll with respect to the support plate portions 58a, 58b through a columnar support shaft 68 and a plurality of rollers 69. That is, of the support shaft 68, an end portion on the outer side in the radial direction centered on a center axis of the driven cam 39 is internally fitted and fixed to the support hole 59 of the support plate portion 58a on the outer side in the radial direction, and, of the support plate portion 68, an end portion on the inner end in the radial direction centered on the central axis of the driven cam 39 is internally fitted and fixed to the support recessed portion 60 of the support plate portion 58b on the inner side in the radial direction. A plurality of rollers 69 are held between an inner circumferential surface of the rolling element 40 and an outer circumferential surface of an intermediate portion in the axial direction of the support shaft 68 so as to be able to roll freely. Thus, the rolling element 40 is supported by the driven cam 39 so as to be able to freely rotate (spin) around a rotation axis C that faces in the radial direction and is centered on the central axis of the driven cam 39.

With the rolling elements 40 supported by the driven cam 39, the one side portions in the axial direction of the rolling elements 40 are arranged inside the rectangular holes 57. The outer circumferential surface of each of the rolling elements 40 is in rolling contact with the drive cam surface 52 provided on the side surface on the other side in the axial direction of the drive cam 38.

The cam device 31 drives the drive cam 38 to rotate, and increases or decreases an amount that the rolling element 40 ride over the first bottom portions 52a or the second bottom portions 52e of the drive cam surface 52, thereby moving the driven cam 39 in the axial direction and expanding or contracting a distance in the axial direction between the drive cam 38 and the driven cam 39, that is, the axial dimension of the cam device 31.

An electric actuator 32 has a shift motor 70 and a reducer 71, and the shift motor 70 rotationally drives the drive cam 38 of the cam device 31 through the reducer 71.

In the present example, the reducer 71 is configured as a worm reducer. That is, the reducer 71 is configured by engaging worm teeth provided on an outer circumferential surface of a worm 72 connected to the output shaft of the shift motor 70 with wheel teeth 53 provided on an outer circumferential surface of the drive cam 38. The worm 72 is rotatably supported against the stationary portion 14 by a pair of support bearings 73a, 73b. However, the reducer 71 can also be configured by engaging a spur gear or bevel gear provided on an output shaft of an electric motor with a spur gear or bevel gear provided on the drive cam, or by stretching a belt or chain between the output shaft of the electric motor and the drive cam.

The electric friction clutch device 11 is configured to be switchable between a connected mode in which torque is transmitted between the first clutch member and the second clutch member by pressing the first friction plates 33 and the second friction plates 34 against each other based on expanding and contracting the dimension in the axial direction of the cam device 31, and a disconnected mode in which torque is not transmitted between the first clutch member and the second clutch member by releasing the force pressing the first friction plates 33 and the second friction plates 34 against each other.

In the present example, the drive cam 38 is rotationally driven by the electric actuator 32, and the axial dimension of the cam device 31, that is, the distance in the axial direction between the drive cam 38 and the driven cam 39, is increased, thereby pressing the first friction plates 33 and the second friction plates 34 against each other, and the axial dimension of the cam device 31 is reduced, thereby releasing the force pressing the first friction plates 33 and the second friction plates 34 against each other.

The electric friction clutch device 11 may further include, as an optional component, an elastic biasing mechanism 30 that is provided between the rotating member 10, which is the first clutch member, or the input member 8, which is the second clutch member, and a friction engagement portion 29, and that elastically biases the first friction plates 33 and the second friction plates 34 in directions pressing against each other.

In this case, the electric friction clutch device 11 is configured so that, based on the relative displacement of the driven cam 39 in a direction that increases the distance in the axial direction between the driven cam 39 and the drive cam 38, the driven cam 39 presses the elastic biasing mechanism 30 in a direction that releases the force pressing the first friction plates 33 and the second friction plates 34 against each other; and based on the relative displacement of the driven cam 39 in a direction that decreases the distance in the axial direction between the driven cam 39 and the drive cam 38, the elastic biasing mechanism 30 presses the first friction plates 33 and the second friction plates 34 against each other.

Alternatively, the electric friction clutch device 11 may further include, as an optional component, an elastic biasing mechanism that is arranged between the friction engagement portion 29 and the driven cam 39 and elastically biases the friction engagement portion 29 and the driven cam 39 in directions away from each other.

In this case, the electric friction clutch device 11 is configured so that the driven cam 39 presses the first friction plates 33 and the second friction plates 34 toward each other through the elastic biasing mechanism 30 based on the relative displacement of the driven cam 39 in the direction of increasing the distance in the axial direction between the driven cam 39 and the drive cam 38, and so that the force pressing the first friction plates 33 and the second friction plates 34 toward each other is released based on the relative displacement of the driven cam 39 in the direction of decreasing the distance in the axial direction between the driven cam 39 and the driving cam 38.

In the present example, the electric friction clutch device 11 is provided between the rotating member 10, which is the first clutch member, or the input member 8, which is the second clutch member, and the friction engagement portion 29, and includes an elastic biasing mechanism 30 that elastically biases the first friction plates 33 and the second friction plates 34 in directions pressing them against each other.

In the present example, the elastic biasing mechanism 30 includes a piston 36 and an elastic member 37.

The piston 36 is supported so as to be capable of displacement in the axial direction relative to the rotating member 10. The piston 36 is configured in a shape of a hollow circular plate, and is supported around a portion of the rotating member 10 between the small-diameter flange portion 18 and the flange portion 19 in the axial direction, allowing displacement in the axial direction relative to the rotating member 10. An end surface on the other side in the axial direction of a portion on the other side in the radial direction of the piston 36 is opposed to a side surface on the one side in the axial direction of a first friction plate 33 or a second friction plate 34 that is located farthest to the one side in the axial direction of the first friction plates 33 or the second friction plates 34.

The elastic member 37 is provided between the rotating member 10 and the piston 36. In the present example, the elastic member 37 is sandwiched in an elastically compressed state between a side surface on the other side in the axial direction of the small-diameter flange portion 18 of the rotating member 10 and a side surface of the one side in the axial direction of the piston 36. In other words, the elastic biasing mechanism 30 elastically biases the first friction plate 33 or the second friction plate 34, which is at the endmost portion on the one side in the axial direction, toward the other side in the axial direction through the piston 36 due to the force of the elastic member 37 attempting to elastically restore the original shape, thereby elastically biasing the first friction plates 33 and the second friction plates 34 in directions in which they are pressed against each other.

The specific configuration of the elastic member is not particularly limited. In the present example, the elastic member 37 is configured by at least one disc spring, and in the illustrated example, two disc springs. However, the elastic member may also be configured by other elastic members such as at least one coil spring.

The elastic biasing mechanism 30 of the present example further includes a thrust bearing 61, a pressing member 62, and a preload applying means 65 between the driven cam 39 and the piston 36.

The thrust bearing 61 is provided between the pressing member 62 arranged opposite the piston 36 and the driven cam 39 of the cam device 31. The thrust bearing 61 has a pair of raceway rings 63a, 63b and a plurality of rolling elements 64 arranged to roll freely between the pair of raceway rings 63a, 63b. Of the pair of raceway rings 63a, 63b, the raceway ring 63b on the other side in the axial direction is supported and fixed to the driven cam 39.

The pressing member 62 has a cylindrical base portion 66 and partial cylindrical portions 67 that protrude toward the one side in the axial direction from a plurality of locations (three locations in the illustrated example) in the circumferential direction at an end portion on the one side in the axial direction of the base portion 66. A raceway ring 63a on the one side in the axial direction of the pair of raceway rings 63a and 63b of the thrust bearing 61 is supported by and fixed to an end portion on the other side in the axial direction of the base portion 66. The partial cylindrical portions 67 are inserted into through holes 20 of the rotating member 10, and the tip-end portions (the end portions on the one side in the axial direction) of the partial cylindrical portions 67 face an intermediate portion in the radial direction of a side surface on the other side in the axial direction of the piston 36.

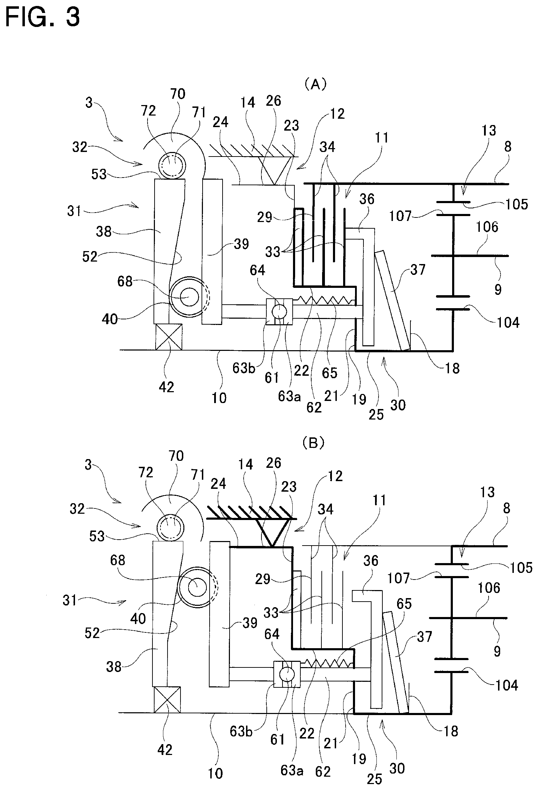

The preload applying means 65 is arranged between the pressing member 62 and the rotating member 10 and applies a preload to the thrust bearing 61. The preload applying means 65 is sandwiched in an elastically compressed state between the pressing member 62 and a side surface on the other side in the axial direction of the first circular ring portion 21 of the flange portion 19 of the rotating member 10. As a result, even in a state in which the piston 36 is pressed toward the one side in the axial direction against the elastic restoring force of the elastic member 37, as illustrated in FIG. 3(B), a preload is applied to the thrust bearing 61, and the thrust bearing 61 is prevented from falling out from between the elastic biasing mechanism 30 and the cam device 31. Note that the elastic force of the preload applying means 65 is smaller than the elastic restoring force of the elastic member 37. The preload applying means 65 can be configured, for example, by an elastic member such as an elastomer like rubber, one or more disc springs, one or more coil springs, or other springs.

The electric friction clutch device 11 of the present example includes, as an optional component, a return spring 35 that is arranged between the first friction plates 33 and the second friction plates 34 and elastically biases the first friction plates 33 and the second friction plates 34 in directions that widens the gap between them. This ensures that the first friction plates 33 and the second friction plates 34 can be separated from each other when the force pressing the first friction plates 33 and the second friction plates 34 against each other is released. The elastic force of the return spring 35 is smaller than the elastic restoring force of the elastic member 37 of the elastic biasing mechanism 30.

In the present example, the electric friction clutch device 11 rotates the drive cam 38 using the electric actuator 32, expanding and contracting the axial dimension of the cam device 31, and displacing the piston 36 of the elastic biasing mechanism 30 in the axial direction relative to the rotating member 10, thereby making it possible to switch between the disconnected mode in which torque is not transmitted between the rotating member 10 and the input member 8, and the connected mode in which torque is transmitted.

First, in a case in which the electric friction clutch device 11 is switched to the disconnected mode in which torque is not transmitted between the rotating member 10 and the input member 8, the drive cam 38 is rotationally driven by the electric actuator 32, so that the rolling element 40 is positioned on the first flat surface portion 52c or the second flat surface portion 52g of the drive cam surface 52, or the amount of riding up on the gentle inclined surface portion 52b, the inclined surface portion 52d, the first medium inclined surface portion 52f, or the second medium inclined surface portion 52h is increased, as illustrated in FIGS. 15(B) and 15(D).

As a result, by moving the driven cam 39 toward the one side in the axial direction, which is the direction in which the distance in the axial direction between driven cam 39 and the drive cam 38 increases, the piston 36 of the elastic biasing mechanism 30 is pressed toward the one side in the axial direction through the thrust bearing 61 and the pressing member 62, and the elastic member 37 is elastically compressed. When the elastic member 37 is elastically compressed, the force pressing the first friction plates 33 and the second friction plates 34 against each other decreases and is eventually lost. As a result, the return spring 35 acts to widen the distance between the first friction plates 33 and the second friction plates 34, disengaging the friction engagement portion 29, and switching the electric friction clutch device 11 to the disconnected mode.

In contrast, in a case in which the electric friction clutch device 11 is switched to the connected mode in which torque is transmitted between the rotating member 10 and the input member 8, the electric actuator 32 rotates and drives the drive cam 38, so that the rolling element 40 is positioned at the first bottom portion 52a or the second bottom portion 52e of the drive cam surface 52, or the amount of riding up onto the gentle inclined surface portion 52b, the inclined surface portion 52d, the first medium inclined surface portion 52f, or the second medium inclined surface portion 52h is reduced, as illustrated in FIGS. 15(A) and 15(C).

This causes the driven cam 39 to move to the other side in the axial direction, that is, in a direction that reduces the distance in the axial direction between the driven cam 39 and the drive cam 38, thereby reducing the force pressing the piston 36 of the elastic biasing mechanism 30 toward the one side in the axial direction. Therefore, the piston 36, thrust bearing 61, and pressing member 62 are pressed toward the other side in the axial direction mainly by the elastic restoring force of the first friction plate 33 and the elastic member 37, and the piston 36 presses the first friction plate 33 or the second friction plate 34 that is at the endmost portion on the one side in the axial direction toward the other side in the axial direction. As a result, the first friction plates 33 and the second friction plates 34 are pressed against each other, the friction engagement portion 29 is connected, and the electric friction clutch device 11 switches to the connected mode.

In the present example, in a case in which the electric friction clutch device 11 is maintained in the disconnected mode, it is necessary to continue to energize the shift motor 70 in order to prevent the piston 36 from moving toward the other side in the axial direction due to the elastic force of the elastic member 37. In contrast, in a case in which the electric friction clutch device 11 is maintained in the connected mode, the elastic force of the elastic member 37 presses the piston 36 toward the other side in the axial direction, thereby pressing the first friction plates 33 and the second friction plates 34 against each other. Therefore, in a case in which the electric friction clutch device 11 is maintained in the connected mode, it is not necessary to continue to energize the shift motor 70. In other words, the electric friction clutch device 11 of the present example is configured as a normally closed type clutch device.

The rotation transmission state switching device 12 includes a first member 74 having engaging recessed portions 77 at a plurality of locations in the circumferential direction, a second member 75 arranged coaxially with the first member 74, and a mode selecting member 76 that rotates or displaces in the axial direction in accordance with the rotation of the drive cam 38.

One member of the first member 74 and the second member 75 is connected to the rotating member 10 so as to rotate integrally with the rotating member 10, or is constituted by the rotating member 10. In addition, the other member of the first member 74 and the second member 75 is supported so as not to be rotatable against the stationary portion 14, which does not rotate even during use. In the present example, the first member 74 is connected to the rotating member 10 so as to rotate integrally with the rotating member 10, and the second member 75 is supported so as not to rotate against the stationary portion 14, which does not rotate even during use. Moreover, the mode selecting member 76 rotates in conjunction with the rotation of the drive cam 38.

The rotation transmission state switching device 12 is switched based on the rotation or displacement in the axial direction of the mode selecting member 76, and has a free mode in which rotation of the first member 74 relative to the second member 75 is allowed regardless of the relative rotation direction between the first member 74 and the second member 75, and a locked mode in which relative rotation between the first member 74 and the second member 75 is prevented regardless of the relative rotation direction between the first member 74 and the second member 75.

The rotation transmission state switching device 12 is configured to be switched to the free mode by disengaging an engaging member from at least one of the first member 74 and the second member 75 based on the rotation or displacement in the axial direction of the mode selecting member 76, and to be switched to the locked mode by engaging the engaging member with both the first member 74 and the second member 75.

In addition to the free mode and the locked mode, the rotation transmission state switching device 12 can have a one-way clutch mode in which only rotation of the first member 74 relative to the second member 75 in a predetermined direction is allowed. The rotation transmission state switching device 12 of the present example has the one-way clutch mode. More specifically, the rotation transmission state switching device 12 is capable of switching among the free mode, the locked mode, and the one-way clutch mode based on the rotation of the mode selecting member 76.

In a case in which the rotation transmission state switching device 12 has the one-way clutch mode, the engaging member can include a first engaging member that, in a state of being stretched across the first member 74 and the second member 75, allows rotation of the one member relative to the other member in a predetermined direction and prevents rotation in the opposite direction to the predetermined direction, and a second engaging member that, in a state of being stretched across the first member 74 and the second member 75, prevents rotation of the one member relative to the other member in the opposite direction to the predetermined direction and allows rotation in the predetermined direction.

The rotation transmission state switching device 12 can be switched to the free mode by disengaging the first engaging member from at least one of the first member 74 and the second member 75, and by disengaging the second engaging member from at least one of the first member 74 and the second member 75. The rotation transmission state switching device 12 is switched to the locked mode by engaging the first engaging member and the second engaging member with both the first member 74 and the second member 75. In addition, the rotation transmission state switching device 12 can be switched to the one-way clutch mode by engaging the first engaging member with both the first member 74 and the second member 75, and disengaging the second engaging member from at least one of the first member 74 and the second member 75.

In the present example, the first member 74 has engaging recessed portions 77 at a plurality of locations in the circumferential direction on an outer circumferential surface thereof. That is, the first member 74 has, on the outer circumferential surface thereof, a gear-shaped recessed-protruding portion 79 in which engaging recessed portions 77 and protruding portions 78 are alternately arranged in the circumferential direction.

Moreover, the first member 74 also has an outer diameter side recessed-protruding engaging portion 80 on an inner circumferential surface thereof, which is made up of recessed and protruding portions alternately arranged in the circumferential direction. The first member 74 is supported so as not to be able to rotate relative to the rotating member 10 by engaging the outer diameter side recessed-protruding engaging portion 80 with an inner diameter side recessed-protruding engaging portion 81 provided on an outer circumferential surface of the second cylindrical portion 24 of the rotating member 10. That is, the first member 74 rotates integrally with the rotating member 10.

The second member 75 is supported around the first member 74 coaxially with the first member 74 and rotatably relative to the first member 74. In other words, the second member 75 has an inner circumferential surface that faces the outer circumferential surface of the first member 74, that is, the tip-end surfaces of the protruding portions 78, with a gap therebetween. The second member 75 has an inner diameter side recessed-protruding engaging portion 82 on an outer circumferential surface thereof, which is made up of recessed and protruding portions alternately arranged in the circumferential direction. The second member 75 is supported so as not to rotate against the stationary portion 14 by engaging the inner diameter side recessed-protruding engaging portion 82 with an outer diameter side recessed-protruding engaging portion provided on an inner circumferential surface of the stationary portion 14. In other words, the second member 75 does not rotate even when the two-speed transmission 3 is in use.

The second member 75 includes a base portion 83 having a rectangular cross-sectional shape and a cylindrical portion 84 that protrudes from an end portion on the outer side in the radial direction of a side surface on the one side in the axial direction of the base portion 83 toward the one side in the axial direction around the entire circumference thereof.

The base portion 83 has a plurality of first holding recessed portions 85 and a plurality of second holding recessed portions 86 (six of each in the illustrated example) that are alternately arranged in the circumferential direction.

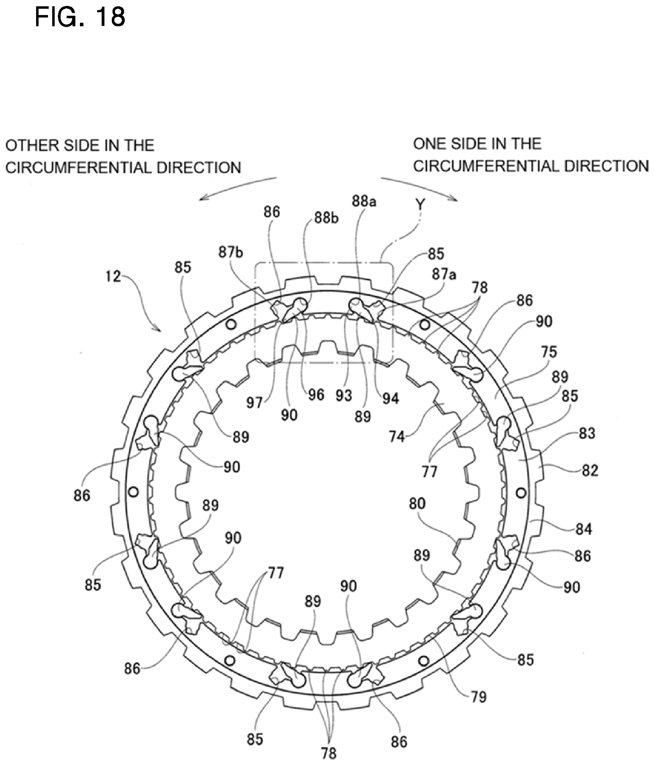

Each of the first holding recessed portions 85 opens to the inner circumferential surface of the base portion 83 and to the side surface on the other side in the axial direction. Each of the first holding recessed portions 85 includes a spring holding portion 87a and a seat portion 88a. The spring holding portion 87a has an approximately rectangular opening shape with a major axis extending radially outward while going toward one side in the circumferential direction (the front side in the clockwise direction in FIGS. 18 to 20) when viewed from the other side in the axial direction. The seat portion 88a has a generally circular opening shape when viewed from the other side in the axial direction, and is arranged adjacent to the other side in the circumferential direction of the spring holding portion 87a (the rear side in the clockwise direction in FIGS. 18 to 20).

Each of the second holding recessed portions 86 opens to the inner circumferential surface of the base portion 83 and to the side surface on the other side in the axial direction. When viewed from the other side in the axial direction, each of the second holding recessed portion 86 has a shape symmetrical to the first holding recessed portion 85 with respect to an imaginary plane including the center axis of the second member 75. That is, each second holding recessed portion 86 includes a spring holding portion 87b and a base portion 88b. The spring holding portion 87b has a generally rectangular opening shape with a major axis extending outward in the radial direction while going toward the other side in in the circumferential direction when viewed from the other side in the axial direction. The seat portion 88b has a generally circular opening shape when viewed from the other side in the axial direction, and is arranged adjacent to the one side in the circumferential direction of the spring holding portion 87a.

The rotation transmission state switching device 12 of the present example has a first pawl member 89 as a first engaging member, a second pawl member 90 as a second engaging member, a first pawl biasing member 91 and a second pawl biasing member 92. In the present example, the rotation transmission state switching device 12 has a plurality of first pawl members 89, a plurality of second pawl members 90, a plurality of first pawl biasing members 91, and a plurality of second pawl biasing members 92, and the same number of each.

Each of the first pawl members 89 includes a first base portion 93 and a first engaging pawl 94.

The first base portion 93 is configured in an approximately cylindrical shape and is supported (pivotally supported) on the seat portion 88a of the first holding recessed portion 85 so as to be able to pivot about a pivot axis parallel to a central axis of the second member 75.

The first engaging pawl 94 is formed in a generally flat plate shape and extends from the first base portion 93 toward the one side in the circumferential direction. The first engaging pawl 94 has a portion on the other side in the axial direction facing (engaging with) outer circumferential surfaces of an annular protruding portion 95 of the mode selecting member 76, and a portion on the one side in the axial direction facing the recessed and protruding portion 79 of the first member 74 (engaging so as to be able to engage and disengage with the engaging recessed portions 77).

Each of the second pawl members 90 includes a second base portion 93 and a second engaging pawl 94.

The second base portion 96 is configured in a substantially cylindrical shape and is supported by the seat portion 88b of the second holding recessed portion 86 so as to be able to pivot about a pivot axis parallel to the central axis of the second member 75.

The second engaging pawl 97 is formed in a generally flat plate shape and extends from the second base portion 96 toward the other side in the circumferential direction. The second engaging pawl 97 has a portion on the other side in the axial direction facing the outer circumferential surface of the annular protruding portion 95 of the mode selecting member 76, and a portion on the one side in the axial direction facing the recessed and protruding portion 79 of the first member 74.

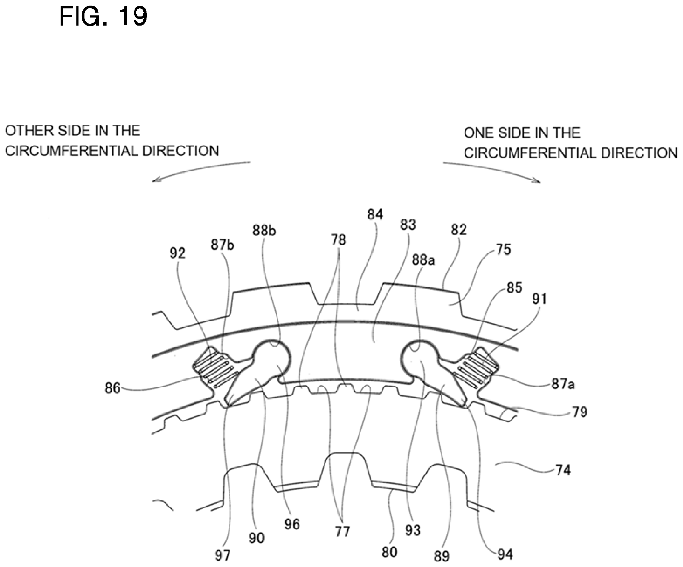

The first pawl biasing member 91 elastically biases the first engaging pawl 94 of the first pawl member 89 in a direction to engage with the engaging recessed portions 77 of the first member 74. That is, the first pawl biasing member 91 applies a biasing force to the first claw member 89 in a direction that causes the first pawl member 89 to pivot clockwise in FIG. 19 around the central axis (pivot axis) of the first base portion 93. More specifically, the first pawl biasing member 91 is configured by an elastic member such as a coil spring, and is held in an elastically compressed state between a bottom surface (surface facing inward in the radial direction) of the spring holding portion 87a of the first holding recessed portion 85 and an outer surface in the radial direction of the first engaging pawl 94.

The second pawl biasing member 92 elastically biases the second engaging pawl 97 of the second pawl member 90 in a direction to engage with the engaging recessed portions 77 of the first member 74. That is, the second pawl biasing member 92 applies a biasing force to the second pawl member 90 in a direction that causes the second pawl member 90 to pivot counterclockwise in FIG. 19 around the central axis of the second base portion 96. More specifically, the second pawl biasing member 92 is configured by an elastic member such as a coil spring, and is held in an elastically compressed state between a bottom surface (surface facing inward in the radial direction) of the spring holding portion 87b of the second holding recessed portion 86 and an outer surface in the radial direction of the second engaging pawl 97.

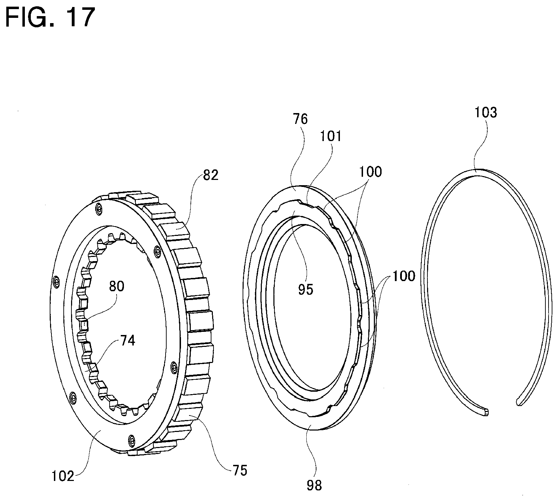

As illustrated in FIG. 17, the mode selecting member 76 has a base portion 98 that is approximately circular and has an annular protrusion 95 that protrudes from a radial middle portion of a side surface on the other side in the axial direction of the base 98 toward the other side in the axial direction around the entire circumference.

The base portion 98 has plate-side engaging holes 99 at a plurality of locations (three locations in the illustrated example) at equal intervals in the circumferential direction in an intermediate portion in the radial direction of a side surface on the other side in the axial direction. An end portion on the one side in the axial direction of the pin portions 54 are internally fitted (engaged) into each of the plate-side engagement holes 99 without any looseness. That is, the mode selecting member 76 rotates integrally with the drive cam 38 (in the same direction and at the same speed).

The annular protruding portion 95 has protruding portions 100 on the outer circumferential surface that protrude outward in the radial direction at a plurality of locations in the circumferential direction. That is, the annular protruding portion 95 has a gear-shaped recessed and protruding portion 101 on the outer circumferential surface, in which the protruding portions 100 and recessed portions are alternately arranged in the circumferential direction.

The first member 74, the second member 75, and the mode selecting member 76 are combined by a cover body 102 and a retaining ring 103 so as to be capable of relative rotation but not capable of relative displacement in the axial direction (so as to prevent inadvertent separation in the axial direction), thereby forming the rotation transmission state switching device 12.

More specifically, in a state in which the first member 74 is positioned on the inner side in the radial direction of a portion on the one side in the axial direction of the base portion 83 of the second member 75, the circular ring-shaped cover body 102 is supported by and fixed to a side surface on the one side in the axial direction of the second member 75 by screwing, and a side surface of the other side in the axial direction of an inner side portion in the radial direction of the cover body 102 is opposed to a side surface on the one side in the axial direction of the first member 74. This prevents the first member 74 from displacing toward the one side in the axial direction relative to the second member 75.

The annular protruding portion 95 of the mode selecting member 76 is positioned on an inner side in the radial direction of a portion on the other side in the axial direction of the base portion 83 of the second member 75, and a tip-end surface (side surface on the one side in the axial direction) of the annular protruding portion 95 is in sliding contact with or closely facing a side surface on the other side in the axial direction of the first member 74, and a side surface on the one side in the axial direction of an outer-side portion in the radial direction of the base portion 98 is in sliding contact with or closely facing a side surface on the other side in the axial direction of the base portion 83 of the second member 75, and a retaining ring 103 is engaged with an end portion on the other side in the axial direction of an inner circumferential surface of the cylindrical portion 84 of the second member 75. Thus, the first member 74 and the mode selecting member 76 are prevented from displacing toward the other side in the axial direction relative to the second member 75.

The rotation transmission state switching device 12 in the present example is configured to be able to switch between the free mode, the locked mode, and the one-way clutch mode by switching the engagement state between the first engaging pawl 94 of the first pawl member 89 and the engaging recessed portion 77 of the first member 74, and the engagement state between the second engaging pawl 97 of the second pawl member 90 and the engaging recessed portions 77, based on the rotation of the mode selecting member 76.

### <Free Mode>

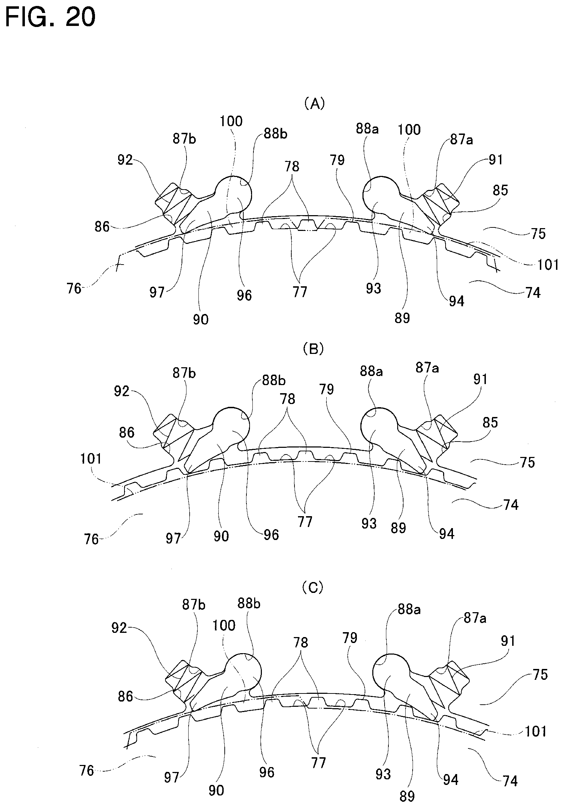

In the free mode, a circumferential phase of the mode selecting member 76 relative to the second member 75 is adjusted, and as illustrated in FIG. 20(A), the protruding portions 100 push the first engaging pawl 94 outward in the radial direction against the elastic force of the first pawl biasing member 91, and push the second engaging pawl 97 outward in the radial direction against the elastic force of the second pawl biasing member 92. Thus, the engaging recessed portions 77 of the first member 74 and the first engaging pawl 94 and second engaging pawl 97 are disengaged. In this state, regardless of the relative rotation direction between the first member 74 and the second member 75, the first member 74 is allowed to rotate relative to the second member 75. That is, regardless of the direction of rotation of the first member 74, rotation of the first member 74 relative to the stationary portion 14 is allowed.

### <Locked Mode>

In the locked mode, the circumferential phase of the mode selecting member 76 relative to the second member 75 is adjusted, and the protruding portions 100 are positioned at positions offset in the circumferential direction from the first engaging pawl 94 of the first pawl member 89 and the second engaging pawl 97 of the second claw member 90, as illustrated in FIG. 20(B). That is, the recessed portions of the recessed and protruding portion 101 are aligned in phase with the first engaging pawl 94 and the second engaging pawl 97 in the circumferential direction. Thus, the engaging recessed portions 77 of the first member 74 engage with the first engaging pawl 94 and the second engaging pawl 97. In this state, regardless of the relative rotation direction between the first member 74 and the second member 75, the first member 74 is prevented from rotating relative to the second member 75. That is, regardless of the direction of rotation of the first member 74, rotation of the first member 74 relative to the stationary portion 14 is prevented.

### <One-way Clutch Mode>

In the one-way clutch mode, the circumferential phase of the mode selecting member 76 relative to the second member 75 is adjusted, and as illustrated in FIG. 20(C), the protruding portions 100 push only the second engaging pawl 97 outward in the radial direction against the elastic force of the second pawl biasing member 92. Thus, the engaging recessed portions 77 of the first member 74 engage with the first engaging pawl 94, and the engaging recessed portions 77 disengage from the second engaging pawls 97. In this state, only rotation of the first member 74 relative to the second member 75 in a specified direction (clockwise in FIG. 20(C)) is allowed, and rotation in a direction opposite to the predetermined direction (counterclockwise in FIG. 20(C)) is prevented.

That is, when the first member 74 attempts to rotate in the predetermined direction relative to the second member 75, the first engaging pawl 94 is pushed up outward in the radial direction by the protruding portions 78 of the recessed and protruding portion 79 against the elastic force of the first pawl biasing members 91. As a result, the first member 74 is allowed to rotate in the predetermined direction. In contrast, in a case in which the first member 74 attempts to rotate in the opposite direction to the predetermined direction relative to the second member 75, the engagement between the engaging recessed portions 77 and the first engaging pawl 94 prevents the first member 74 from rotating in the opposite direction to the predetermined direction. In short, the rotation transmission state switching device 12 operates as a ratchet-type one-way clutch.

Note that the predetermined direction coincides with a forward rotation direction of the input member 8. The forward rotation direction of the input member 8 refers to a rotation direction of the input member 8 when moving the automobile forward.

The two-speed transmission 3 is configured to be able to switch between a high reduction ratio mode in which the reduction ratio between the input member 8 and the output member 9 is large and a low reduction ratio mode in which the reduction ratio between the input member 8 and the output member 9 is small by switching the modes of the electric friction clutch device 11 and the modes of the rotation transmission state switching device 12.

The two-speed transmission 3 of the present example further includes a planetary gear mechanism 13 as an optional component. In other words, the two-speed transmission 3 of the present example can switch between the high reduction ratio mode and the low reduction ratio mode by switching the modes of the electric friction clutch device 11 and the modes of the rotation transmission state switching device 12, thereby switching the transmission path of torque transmitted through the planetary gear mechanism 13.

The planetary gear mechanism 13 has a sun gear 104, a ring gear 105, a carrier 106, and a plurality of planetary gears 107.

The ring gear 105 is arranged around the sun gear 104 and coaxially with the sun gear 104.

The carrier 106 is supported coaxially with the sun gear 104 and the ring gear 105 and is supported so as to be capable of rotating relative to the sun gear 104 and the ring gear 105.

The plurality of planetary gears 107 engage with the sun gear 104 and the ring gear 105, and are supported by the carrier 106 so as to be able to rotate (spin) around their own central axes.

The plurality of planetary gears 107 can each be configured by a planetary gear that engages with both the sun gear 104 and the ring gear 105. That is, the planetary gear mechanism 13 can be configured as a single-pinion type planetary gear mechanism. Alternatively, the plurality of planetary gears 107 may include a first planetary gear that engages with the sun gear 104 and a second planetary gear that engages with the ring gear and the first planetary gear. In other words, the planetary gear mechanism 13 can be configured as a double-pinion type planetary gear mechanism.

In the two-speed transmission 3, the input member 8, the output member 9, the first friction plate 33, and the second friction plate 34 of the electric friction clutch device 11, and the first member 74 and the second member 75 of the rotation transmission state switching device 12 are connected to the sun gear 104, the ring gear 105, the carrier 106, or the stationary portion 14 so that the reduction ratio between the input member 8 and the output member 9 can be switched between two levels, high and low, by switching the modes of the electric friction clutch device 11 and the modes of the rotation transmission state switching device.

More specifically, an input element, which is one of the sun gear 104, the ring gear 105, and the carrier 106, is connected to the input member 8 so as to rotate integrally with the input member 8. An output element, which is another of the sun gear 104, the ring gear 105, and the carrier 106 which is apart from the input element, is connected to the output member 9 so as to rotate integrally with the output member 9. In addition, a rotating element, which is a remaining element of the sun gear 104, the ring gear 105, and the carrier 106, which is apart from the input element and the output element, is connected to the rotating member 10 so as to rotate integrally with the rotating member 10.

For example, the ring gear 105 can be connected to the input member 8 so as to rotate integrally with the input member 8, the carrier 106 can be connected to the output member 9 so as to rotate integrally with the output member 9, and the sun gear 104 can be connected to the rotating member 10 so as to rotate integrally with the rotating member 10.

Alternatively, the sun gear 104 can be connected to the input member 8 so as to rotate integrally with the input member 8, the carrier 106 can be connected to the output member 9 so as to rotate integrally with the output member 9, and the ring gear 105 can be connected to the rotating member 10 so as to rotate integrally with the rotating member 10.

Alternatively, the sun gear 104 can be connected to the input member 8 so as to rotate integrally with the input member 8, the ring gear 105 can be connected to the output member 9 so as to rotate integrally with the output member 9, and the carrier 106 can be connected to the rotating member 10 so as to rotate integrally with the rotating member 10.

In the present example, the ring gear 105 is connected to the input member 8 so as to rotate integrally with the input member 8, the carrier 106 is connected to the output member 9 so as to rotate integrally with the output member 9, and the sun gear 104 is connected to the rotating member 10 so as to rotate integrally with the rotating member 10.

More specifically, the sun gear 104 is provided at an end portion on the one side in the axial direction of the rotating member 10.

The ring gear 105 is provided at an intermediate portion in the axial direction of the input member 8.

The carrier 106 is configured integrally with the output member 9.

In addition, each of the plurality of planetary gears 107 engages with both the sun gear 104 and the ring gear 105, and is supported by the carrier 106 so as to be able to rotate (spin) around its own central axis. That is, in the present example, the planetary gear mechanism 13 is configured as a single-pinion type planetary gear mechanism.

The torque transmission mechanism 4 transmits torque between the output member 9 and the drive wheels 108.

In the present example, the torque transmission mechanism 4 is configured by a differential device that distributes rotational torque of the output member 9 to a pair of drive wheels 108. By engaging the output gear 17 of the output member 9 with a ring gear 117 of a differential device of the torque transmission mechanism 4, torque can be transmitted between the output member 9 and the drive wheels 108.

The friction brake device 5 is arranged between the output member 9 and the drive wheels 108 to brake rotation of the drive wheels 108.

In the present example, the friction brake device 5 is configured to brake the rotation of the drive wheels 108 by pressing a friction member such as a pad or shoe against a braking rotating body 110 such as a rotor or drum that is supported by and fixed to a drive shaft 109 of the differential device of the torque transmission mechanism 4.

The control device 6 has a reduction ratio switching function and a cooperative control function.

In the present example, in order to implement the reduction ratio switching function and the cooperative control function, the control device 6 is configured to control the drive motor 2, the two-speed transmission 3, and the friction brake device 5 based on signals from various sensors such as an accelerator position sensor 111 that detects the amount of operation of an accelerator pedal, an input rotation sensor 112 that detects rotational speed of the motor output shaft 7, and an output rotation sensor 113 that detects rotational speed of the drive wheels 108.

The control device 6 also includes a transmission control unit (TCU) 114 that controls the two-speed transmission 3, and a vehicle control unit (VCU) 116 that controls various components of the vehicle, including the TCU 114 and an inverter 115 for supplying power to the drive motor 2.

First, the reduction ratio switching function provided in the control device 6 will be described.

The reduction ratio switching function switches the modes of the electric friction clutch device 11 and the modes of the rotation transmission state switching device 12 based on rotational driving of the drive cam 38 by the electric actuator 32, thereby switching the two-speed transmission 3 between a high reduction ratio mode in which the reduction ratio between the input member 8 and the output member 9 is large, and a low reduction ratio mode in which the reduction ratio between the input member 8 and the output member 9 is small. In the electric vehicle drive device 1 of the present example, the control device 6 controls the electric actuator 32 through the TCU 114 based on commands from the VCU 116, thereby switching the modes of the electric friction clutch device 11 and the modes of the rotation transmission state switching device 12, and executing the reduction ratio switching function.

### <Low Reduction Ratio Mode>

To switch the two-speed transmission 3 to the low reduction ratio mode, the electric friction clutch device 11 is switched to the connected mode, and the rotation transmission state switching device 12 is switched to the free mode.

More specifically, the drive cam 38 is rotated by the electric actuator 32 to expand the dimension in the axial direction of the cam device 31, thereby switching the electric friction clutch device 11 to the connected mode. As a result, the input member 8 and the rotating member 10 rotate integrally, and the sun gear 104 and the ring gear 105 rotate integrally.

At the same time as switching the electric friction clutch device 11 to the connected mode, the rotation of the drive cam 38 adjusts the circumferential phase of the mode selecting member 76 relative to the second member 75, and the rotation transmission state switching device 12 is switched to the free mode in which rotation of the first member 74 relative to the second member 75 is allowed regardless of the relative rotation direction between the first member 74 and the second member 75. As a result, the rotation of the rotary member 10 relative to the stationary portion 14 is allowed, and rotation of the sun gear 104 is allowed.

In the low reduction ratio mode, the sun gear 104, the ring gear 105, and the carrier 106 rotate in the same direction and at the same speed, and the entire planetary gear mechanism 13 rotates as a unit, in a so-called glued state. Therefore, the rotational torque of the input member 8 is transmitted in the order of the input member 8, the carrier 106, and the output member 9, as indicated by the thick line in FIG. 3(A), and is extracted from the output member 9.

### <High Reduction Ratio Mode>

To switch the two-speed transmission 3 to the high reduction ratio mode, the electric friction clutch device 11 is switched to the disconnected mode, and the rotation transmission state switching device 12 is switched to the locked mode.

More specifically, the drive cam 38 is rotated by the electric actuator 32 to reduce the dimension in the axial direction of the cam device 31, thereby switching the electric friction clutch device 11 to the disconnected mode. As a result, the input member 8 and the rotating member 10 rotate relative to each other, and the sun gear 104 and the ring gear 105 become rotatable relative to each other.

At the same time as switching the electric friction clutch device 11 to the disconnected mode, the rotation of the drive cam 38 switches the rotation transmission state switching device 12 to the locked mode in which rotation of the first member 74 relative to the second member 75 is prevented regardless of the relative rotation direction between the first member 74 and the second member 75. As a result, rotation of the rotating member 10 relative to the stationary portion 14 is prevented, and rotation of the sun gear 104 is prevented.

In the high reduction ratio mode, the rotational torque of the input member 8 is transmitted in the following order, as indicated by the thick line in FIG. 3(B), through the input member 8, the ring gear 105, rotational motion of the planetary gear 107, orbital motion of the planetary gear 107 based on engaging with the sun gear 104, the carrier 106, and the output member 9, and is then extracted from the output member 9. In the high reduction ratio mode, the reduction ratio between the input member 8 and the output member 9 is determined by a gear ratio between the ring gear 105 and the sun gear 104 (number of teeth of the ring gear 105/number of teeth of the sun gear 104).

In the drive apparatus for electric vehicle 1 of the present example, the reduction ratio between the input member 8 and the output member 9 can be switched between two levels, high and low, by switching the modes of the electric friction clutch device 11 and the modes of the rotation transmission state switching device 12 based on rotational driving of one drive cam 38 by one electric actuator 32. More specifically, for example, when the power input to the input member 8 is in a low-speed, high-torque region, the two-speed transmission 3 is switched to a high reduction ratio mode, and when the power input to the input member 8 is in a high-speed, low-torque region, the two-speed transmission 3 is switched to a low reduction ratio mode. Therefore, the acceleration performance and high-speed performance of electric vehicles and hybrid vehicles running using only an electric motor as a drive source can be made similar to that of a gasoline engine vehicle indicated by the dashed line c in FIG. 36, with characteristics that are a continuation of a portion of the solid line a to the left of point P in FIG. 36 and a portion of the chain line b to the right of point P.

The drive apparatus for electric vehicle 1 of the present example does not require a hydraulic system for controlling friction engagement devices such as clutches and brakes. This allows for the simplification of a system in electric vehicles and hybrid vehicles, reducing costs, and improving electric energy efficiency.

In the drive apparatus for electric vehicle 1 disclosed herein, the two-speed transmission 3 can have a reduction ratio switching mode for smoothly switching from the high reduction ratio mode to the low reduction ratio mode during normal forward driving (powered driving). Additionally or alternatively, the two-speed transmission 3 may have a neutral mode in which no torque is transmitted between the input member 8 and the output member 9, a parking mode in which rotation of the output member 9 is locked, or the both. In the present example, the two-speed transmission 3 has the reduction ratio switching mode, neutral mode, and parking mode in addition to the low reduction ratio mode and high reduction ratio mode.

### <Reduction Ratio Switching Mode>

When the two-speed transmission 3 starts to switch from the high reduction ratio mode to the low reduction ratio mode during normal forward driving of the vehicle, first, by adjusting the circumferential phase of the mode selecting member 76 relative to the second member 75, the protruding portions 100 push only the second engaging pawl 97 outward in the radial direction against the elastic force of the second pawl biasing member 92, as illustrated in FIG. 20(C). Thus, only the first engaging pawls 94 engage with the engaging recessed portions 77 of the first member 74, and the rotation transmission state switching device 12 switches to the one-way clutch mode that allows only rotation of the first member 74 relative to the second member 75 in the specified direction (the specified direction in FIG, 20(C)) and prevents rotation in the direction opposite to the specified direction.

At the same time as or after the rotation transmission state switching device 12 switches to the one-way clutch mode, the electric friction clutch device 11 starts to switch from the disconnected mode to the connected mode. When the electric friction clutch device 11 switches from the disconnected mode to the connected mode, the rolling element 40 moves down the gentle inclined surface portion 52b of the drive cam surface 52 based on the rotation of the drive cam 38, as illustrated in the order of FIGS. 15(B) and 15(A). As the amount that the rolling element 40 rides up from the first bottom portion 52a of the drive cam surface 52 gradually decreases, the force pressing the first friction plates 33 and the second friction plates 34 against each other gradually increases (the fastening force F of the friction engagement portion 29 gradually increases). At this time, the input member 8 rotates while causing both side surfaces in the axial direction of the second friction plates 34 to slide (make sliding contact) against both side surfaces in the axial direction of the first friction plates 33.

As the fastening force F of the friction engagement portion 29 gradually increases while the input member 8 is rotating in the forward direction, the torque applied to the second member 75 of the rotation transmission state switching device 12 in the direction opposite to the predetermined direction gradually decreases. At this time, since the rotation transmission state switching device 12 is switched to the one-way clutch mode, the second member 75 does not rotate even when torque is applied to the second member 75 in the direction opposite to the predetermined direction. After the torque applied to the second member 75 in the direction opposite to the predetermined direction gradually decreases to zero, the direction of the torque applied to the second member 75 reverses (torque in the predetermined direction is applied to the second member 75), and at that moment, rotation of the second member 75 in the predetermined direction is allowed.

### <Neutral Mode>

To switch the two-speed transmission 3 to the neutral mode, the electric friction clutch device 11 is switched to the disconnected mode, and the rotation transmission state switching device 12 is switched to the free mode.

To achieve this, by rotating the drive cam 38 using the electric actuator 32, the rolling element 40 is positioned on the second flat surface portion 52g of the drive cam surface 52, and the driven cam 39 displaces in a direction that widens the distance in the axial direction between the driven cam 39 and the drive cam 38 (the one side in the axial direction). As a result, the piston 36 of the elastically biasing mechanism 30 is pressed toward the one side in the axial direction through the thrust bearing 61 and the pressing member 62, thereby elastically compressing the elastic member 37 and eliminating the force pressing the first friction plates 33 and the second friction plates 34 against each other. The return spring 35 acts to widen the distance between the first friction plates 33 and the second friction plates 34, disengaging the friction engagement portion 29 and switching the electric friction clutch device 11 to the disconnected mode. As a result, the input member 8 and the rotating member 10 rotate relative to each other, and the sun gear 104 and the ring gear 105 become rotatable relative to each other.

At the same time as the electric friction clutch device 11 being switched to the disconnected mode, the circumferential phase of the mode selecting member 76 relative to the second member 75 is adjusted, and as illustrated in FIG. 20(A), the protruding portions 100 push the first engaging pawl 94 outward in the radial direction and also push the second engaging pawl 97 outward in the radial direction. As a result, the engaging recessed portions 77 of the first member 74 disengage from the first engaging pawl 94 and the second engaging pawl 97, and the rotation transmission state switching device 12 switches to the free mode in which rotation of the first member 74 relative to the second member 75 is allowed regardless of the relative rotation direction between the first member 74 and the second member 75. As a result, the rotation of the rotary member 10 relative to the stationary portion 14 is allowed, and rotation of the sun gear 104 is allowed.

In the neutral mode, the input member 8 and the output member 9 rotate freely relative to each other, and no torque is transmitted between the input member 8 and the output member 9.

### <Parking-Locked Mode>

To switch the two-speed transmission 3 to the parking-locked mode, the electric friction clutch device 11 is switched to the connected mode, and the rotation transmission state switching device 12 is switched to the locked mode.

To achieve this, by rotating the drive cam 38 using the electric actuator 32, the rolling element 40 is positioned at the second bottom portion 52e of the drive cam surface 52, and the driven cam 39 is displaced in a direction that reduces the distance in the axial direction between the driven cam 39 and the drive cam 38 (towards the other side in the axial direction). This causes the force of the elastic biasing mechanism 30 pressing the piston 36 toward the one side in the axial direction to be lost. Therefore, the piston 36, thrust bearing 61, and pressing member 62 are pressed toward the other side in the axial direction mainly by the elastic restoring force of the first friction plate 33 and the elastic member 37, and the piston 36 presses the first friction plates 33 or the second friction plates 34 that is at the endmost position on the one side in the axial direction toward the other side in the axial direction.

Thus, the first friction plates 33 and the second friction plates 34 are pressed against each other, the friction engagement portion 29 is connected, and the electric friction clutch device 11 switches to the connected mode. As a result, the input member 8 is prevented from rotating relative to the rotating member 10, and the ring gear 105 is prevented from rotating relative to the sun gear 104.

At the same time as the electric friction clutch device 11 being switched to the connected mode, the circumferential phase of the mode selecting member 76 relative to the second member 75 is adjusted, and the protruding portions 100 are positioned at positions circumferentially offset from the first engaging pawl 94 and the second engaging pawl 97, as illustrated in FIG. 20(B). This causes the engaging recessed portions 77 of the first member 74 to engage with the first engaging pawl 94 and the second engaging pawl 97, and the rotation transmission state switching device 12 switches to the locked mode in which rotation of the first member 74 relative to the second member 75 is prevented regardless of the relative rotation direction between the first member 74 and the second member 75. As a result, rotation of the rotating member 10 relative to the stationary portion 14 is prevented, and rotation of the sun gear 104 is prevented.

In the parking-locked mode, the rotation of the input member 8 and the output member 9 is locked.

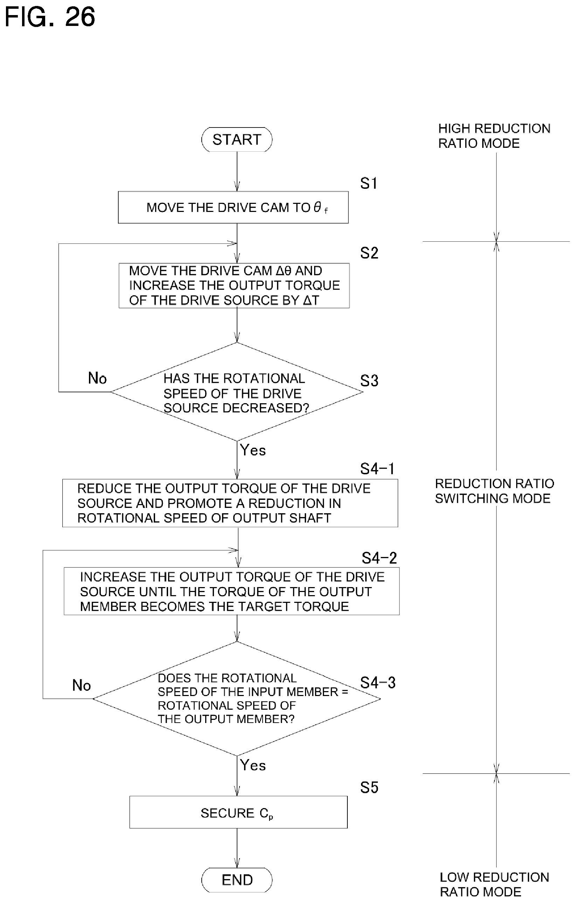

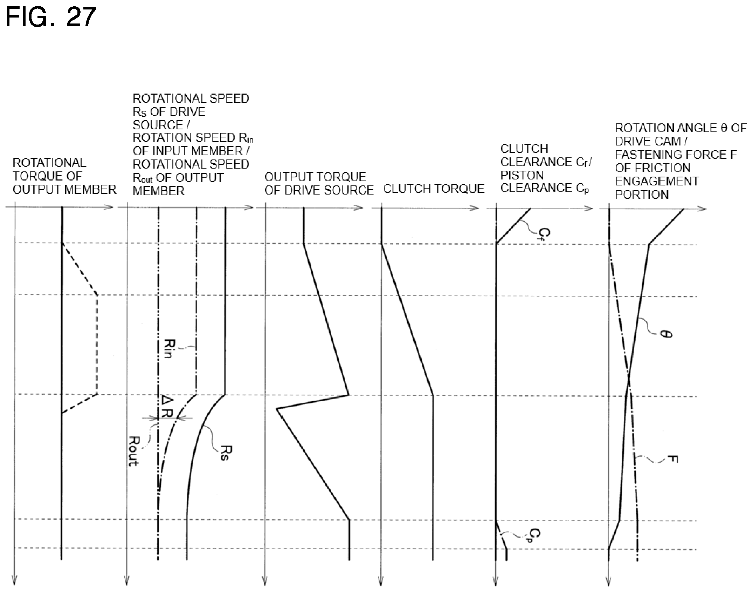

The drive apparatus for electric vehicle 1 of the present example is configured to control the output torque and rotational speed Rₛ of the drive motor 2 and the rotational speed (amount of rotation) of the shift motor 70 to prevent discontinuous (sudden) changes in the rotation torque of the output member 9 and prevent an occurrence of gear change shock when switching from the high reduction ratio mode to the low reduction ratio mode during normal forward driving. An example of this control will be described with reference to FIGS. 26 and 27. The following example is an example in which the rotational torque of the output member 9 is maintained substantially constant before and after switching from the high reduction ratio mode to the low reduction ratio mode.

When switching from the high reduction ratio mode to the low reduction ratio mode is initiated based on conditions such as driving speed of the vehicle and accelerator opening, the electric actuator 32 first rotates the drive cam 38, switching the rotation transmission state switching device 12 to the one-way clutch mode, and moving the phase in the rotational direction of the drive cam 38 to a clutch touch point θ_{f} (S 1). The clutch touch point θ_{f} is a point at which the elastic biasing mechanism 30 starts to generate a force that presses the first friction plates 33 and the second friction plates 34 against each other.

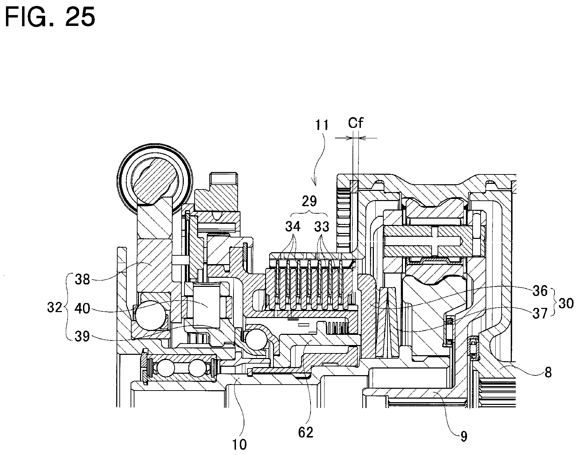

In other words, the clutch touch point θ_{f} is a point at which the end portion on the other side in the axial direction of the piston 36 begins to come into contact with the first friction plate 33 or the second friction plate 34 located at the endmost portion on the one side in the axial direction, that is, a point at which a clutch clearance C_{f} (see FIG. 25) becomes zero. In the present example, the clutch touch point θ_{f} is determined in advance by a clutch touch point detection function.

When the phase in the rotational direction of the drive cam 38 is moved to the clutch touch point θ_{f}, the phase transitions to a torque phase (S2). In the torque phase, the electric actuator 32 rotates the drive cam 38 at a predetermined rpm (rotational speed), reducing the amount that the rolling element 40 rides up from the first bottom portion 52a, thereby gradually increasing the pressing force between the first friction plates 33 and the second friction plates 34, that is, the fastening force F of the friction engagement portion 29. At the same time, the output torque (driving torque, power torque) of the drive motor 2 is gradually increased.

In other words, in a case in which the output torque of the drive motor 2 is maintained constant, in the torque phase, as the fastening force F of the friction engagement portion 29 increases, the torque transmitted to the friction engagement portion 29 increases, and the rotational torque of the output member 9 decreases. Therefore, in the two-speed transmission 3 of the present example, the output torque of the drive motor 2 is gradually increased in accordance with the increase in the fastening force F of the friction engagement portion 29, that is, the amount of rotation of the drive cam 38, so that the rotational torque of the output member 9 can be maintained approximately constant regardless of the increase in the fastening force F of the friction engagement portion 29.

Note that the relationship between the amount of rotation of the drive cam 38 and the amount of increase in the output torque of the drive motor 2 are determined in advance through experiments and calculations. In the present example, the rotational speed of the drive cam 38 in S2 is set to be smaller than the rotational speed of the drive cam 38 in S1. However, the rotational speed of the drive cam 38 in S2 may be set to be the same as the rotational speed of the drive cam 38 in S1, or may be set to be greater than the rotational speed of the drive cam 38 in S1.

More specifically, in S2, the drive cam 38 is rotated by a predetermined angle, and at the same time, the output torque of the drive motor 2 is increased by an amount corresponding to the amount of rotation of the drive cam 38. Then, in the next step S3, it is determined whether or not the torque phase has ended.

That is, in the torque phase, as the fastening force F of the friction engagement portion 29 increases, the clutch torque transmitted to the friction engagement portion 29 increases, and the torque applied to the second member 75 of the rotation transmission state switching device 12 in a direction opposite to the predetermined direction gradually decreases. The torque applied to the second member 75 in the direction opposite to the predetermined direction gradually decreases to zero.

In the present example, when switching from the high reduction ratio mode to the low reduction ratio mode during normal forward driving, the two-speed transmission 3 is switched to the reduction ratio switching mode, and thus, after the torque applied to the second member 75 in the direction opposite to the predetermined direction becomes zero, the direction of the torque applied to the second member 75 reverses (torque in the predetermined direction is applied to the second member 75), and at that moment, rotation of the second member 75 in the predetermined direction is allowed, and rotation of the sun gear 104 is allowed. When the sun gear 104 rotates, the rotational speed Rₛ of the motor output shaft 7 of the drive motor 2 starts to decrease.

Therefore, in the present example, based on the output signal of the input rotation sensor 112 attached to the motor output shaft 7 of the drive motor 2, it is determined that the torque phase has ended when it is determined that the rotational speed Rₛ of the motor output shaft 7 has decreased by more than a predetermined value. This determination is made based on the input rotation sensor 112 attached to the motor output shaft 7 of the drive motor 2.

In a case in which it is determined that the rotational speed Rₛ of the motor output shaft 7 is substantially constant, that is, the decrease in the rotational speed Rₛ of the motor output shaft 7 is smaller than the predetermined value and the torque phase has not ended, the process returns to S2.

In S3, in a case in which it is determined that the amount of decrease in the rotational speed Rₛ of the motor output shaft 7 is equal to or greater than the predetermined value and the torque phase has ended, the process moves to an inertia phase (S4-1 to S4-3).

In the inertia phase, first, the output torque of the drive motor 2 is quickly reduced to encourage a further reduction in the rotational speed Rₛ of the motor output shaft 7 (S4-1). The amount of reduction in the output torque of the drive motor 2 is not particularly limited as long as it can promote a further reduction in the rotational speed Rₛ of the motor output shaft 7. More specifically, for example, the output torque of the drive motor 2 can be reduced to 0 or a negative value.

When the rotational speed Rₛ of the motor output shaft 7 begins to decrease, the output torque of the drive motor 2 is increased so that the rotational torque of the input member 8 becomes a target torque, which is the rotational torque that should be output by the output member 9 when the two-speed transmission 3 has completed switching to the low reduction ratio mode (S4-2). In the present example, the rotational torque of the output member 9 is kept approximately constant before and after switching from the high reduction ratio mode to the low reduction ratio mode, so the output torque of the drive motor 2 is increased until the rotational torque of the input member 8 becomes equal to the rotational torque of the output member 9 at the start of switching from the high reduction ratio mode to the low reduction ratio mode.

The speed at which the output torque of the drive motor 2 is increased is not particularly limited, as long as the rotational torque of the input member 8 can be increased to the target torque by the time the inertia phase is completed. For example, the output torque of the drive motor 2 can be controlled in accordance with a difference (differential rotation) ΔR between a rotational speed Rᵢₙ of the input member 8 and a rotational speed Rₒᵤₜ of the output member 9. More specifically, as the rotational speed Rₛ of the motor output shaft 7 decreases, the rotational speed Rᵢₙ of the input member 8 decreases, and as the differential rotation ΔR becomes smaller, the output torque of the drive motor 2 is increased, and when the differential rotation ΔR becomes 0, the rotational torque of the input member 8 can be controlled to become the target torque.

Next, in S4-3, it is determined whether the rotational speed Rᵢₙ of the input member 8 and the rotational speed Rₒᵤₜ of the output member 9 are equal to each other. More specifically, it is determined whether the difference (differential rotation) ΔR between the rotational speed Rᵢₙ of the input member 8 and the rotational speed Rₒᵤₜ of the output member 9 falls within a predetermined range. This determination is made based on an output signal of the input rotation sensor 112 or output signals of the rotation sensors attached to the input member 8 and the output member 9, respectively.

In a case in which it is determined that the differential rotation ΔR is not within the predetermined range, that is, the rotational speed Rᵢₙ of the input member 8 and the rotational speed Rₒᵤₜ of the output member 9 are not equal, S4-3 determination is executed again after a predetermined time has elapsed.

In a case in which it is determined that the differential rotation ΔR is within the predetermined range, that is, the rotational speed Rᵢₙ of the input member 8 and the rotational speed Rₒᵤₜ of the output member 9 are equal, it is determined that the inertia phase has ended, and the process proceeds to the next step S5.

In S5, the electric actuator 32 rotates the drive cam 38 to a predetermined circumferential phase, positioning the rolling element 40 at the first bottom portion 52a of the driving cam surface 52, and displacing the driven cam 39 toward the other side in the axial direction, in a direction that reduces the distance in the axial direction between the driven cam 39 and the drive cam 38. This ensures a piston clearance Cₚ between an end portion on the one side in the axial direction of the pressing member 62 and a side surface on the other side in the axial direction of the piston 36. In other words, the piston clearance Cₚ is set to 0 or more, and preferably greater than 0.

After the rolling element 40 has been moved to the first bottom portion 52a, the process proceeds to the end. In this way, the two-speed transmission 3 is switched from the high reduction ratio mode to the low reduction ratio mode. After that, the phase of the drive cam 38 in the circumferential direction is maintained, thereby maintaining the two-speed transmission 3 in the low reduction ratio mode.

As described above, in the drive apparatus for electric vehicle 1 of the present example, by controlling the drive motor 2 and the shift motor 70, it is possible to prevent a (sudden) change in the rotational torque of the output member 9 and prevent the occurrence of gear shift shock, even when switching between the high reduction ratio mode and the low reduction ratio mode during normal forward driving. However, in order to prevent the occurrence of gear shift shock, timing for controlling the output torque and rotational speed Rₛ of drive motor 2 and the rotational speed (amount of rotation) of the shift motor 70 becomes important.

For example, when the phase in the rotational direction of the drive cam 38 has not yet reached the clutch touch point θ_{f}, and the output torque of the drive motor 2 is increased by transitioning to S2, there is a possibility that the rotational torque of the output member 9 will inadvertently increase, as indicated by the dashed line in FIG. 27.

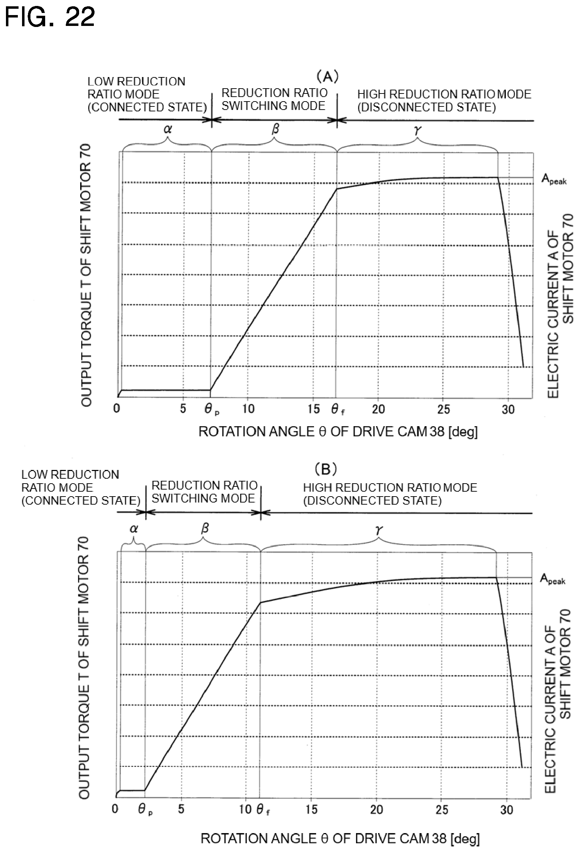

Here, as an amount of wear on the first friction plate 33 and the second friction plate 34 increases with use of the two-speed transmission 3, an amount of pressure required by the elastic biasing mechanism 30 to press the first friction plate 33 or the second friction plate 34, which is at the endmost on the one side in the axial direction, toward the other side in the axial direction in order to switch the electric friction clutch device 11 to the connected mode increases. In other words, the amount of pressure that the cam device 31 must apply to the piston 36 toward the one side in the axial direction when the electric friction clutch device 11 is switched to the disconnected mode is reduced. As a result, a relationship between the rotation angle θ of the drive cam 38 and the current value A of the shift motor 70 changes in the order illustrated in FIG. 22(A) and FIG. 22(B). That is, as is clear from FIGS. 22(A) and 22(B), as the amount of wear of the first friction plates 33 and the second friction plates 34 increases, the clutch touch point θ_{f} decreases.

FIGS. 22(A) and 22(B) are graphs showing a relationship between the rotation angle θ of the drive cam 38 and the output torque T and current value A of the shift motor 70 when the electric friction clutch device 11 is switched from the connected mode to the disconnected mode. FIG. 22(A) illustrates the first friction plates 33 and the second friction plates 34 when they are new and not worn, and FIG. 22(B) illustrates the first friction plates 33 and the second friction plates 34 when they have been significantly worn.

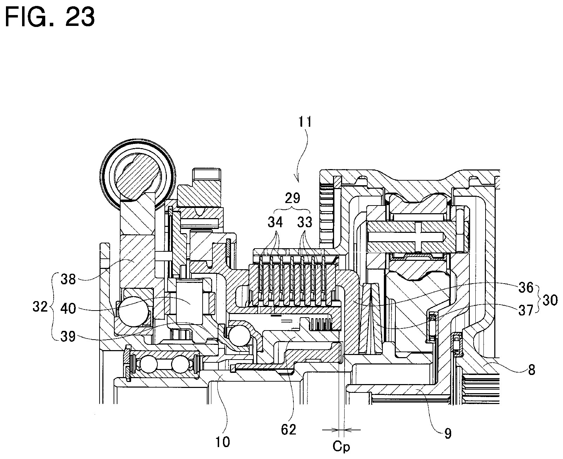

Note that, as is clear from FIGS. 22(A) and 22(B), as the amount of wear of the first friction plates 33 and the second friction plates 34 increases, a piston touch point θₚ also decreases. The piston touch point θₚ is a point at which, when the drive cam 38 is rotated in a direction that switches the friction engagement portion 29 from the connected state to the disconnected state, the elastic biasing mechanism 30 begins to be pressed in a direction that releases the force pressing the first friction plates 33 and the second friction plates 34 against each other. In other words, the piston touch point θₚ is a point at which the piston clearance Cₚ (see FIG. 23) begins to occur between the end portion on the one side in the axial direction of the pressing member 62 and the side surface on the other side in the axial direction of the piston 36 when the drive cam 38 is rotated in a direction that switches the friction engagement portion 29 from the disconnected state to the connected state.

In the drive apparatus for electric vehicle 1 of the present embodiment, the control device 6 has a function for preventing gear shift shock regardless of wear of the first friction plates 33 and the second friction plates 34. More specifically, the control device 6 further includes a piston touch point detection function that detects the piston touch point θₚ, a clutch touch point detection function that detects the clutch touch point θ_{f}, and a touch point adjustment function that adjusts the amount of rotation of the drive cam 38 based on the piston touch point θₚ, the clutch touch point θ_{f}, of the both, when switching between the high reduction ratio mode and the low reduction ratio mode.

As is clear from FIGS. 22(A) and 22(B), when the modes of the electric friction clutch device 11 are switched, the output torque T of the shift motor 70 and the current value A of the shift motor 70 change in the same manner. The two-speed transmission 3 of the present example detects the piston touch point θₚ and the clutch touch point θ_{f} based on a current value A of the shift motor 70 when the electric friction clutch device 11 is switched from the connected mode to the disconnected mode.

When the electric friction clutch device 11 is switched to the connected mode, the rolling element 40 of the cam device 31 is located at the first bottom portion 52a of the drive cam surface 52. In this state, as illustrated in FIG. 23, piston clearance Cₚ exists between the end portion on the one side in the axial direction of the pressing member 62 and the side surface on the other side in the axial direction of the piston 36. The piston 36 is allowed to displace in the axial direction to the other side in the axial direction based on the presence of the piston clearance Cₚ. Therefore, the force of the elastic member 37 attempting to elastically restore its shape to the original shape causes the piston 36 to be elastically pressed toward the other side in the axial direction, and the piston 36 presses the first friction plate 33 or the second friction plate 34 that is at the endmost on the one side in the axial direction toward the other side in the axial direction, causing the first friction plates 33 and the second friction plates 34 to be pressed against each other.

To switch the electric friction clutch device 11 from the connected mode to the disconnected mode, the drive cam 38 is rotated in the predetermined direction based on energization of the shift motor 70, and the amount that the rolling element 40 that rides up from the first bottom portion 52a is increased. At this time, the current value A of the shift motor 70 is substantially constant (range α in FIGS. 22(A) and 22(B)) except for a temporary starting current.

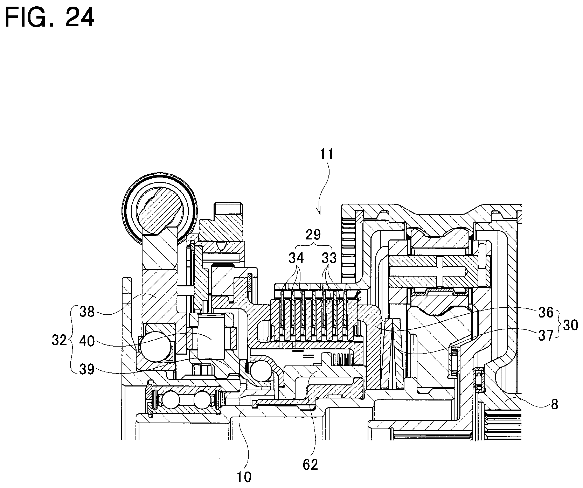

By increasing the amount that the rolling element 40 rides up from the first bottom portion 52a, the pressing member 62 is moved toward the one side in the axial direction, and as illustrated in FIG. 24, the end portion on the one side in the axial direction of the pressing member 62 comes into contact with the side surface on the other side in the axial direction of the piston 36. In other words, the piston clearance Cₚ becomes zero.

When the drive cam 38 is further rotated in the predetermined direction by the shift motor 70 from the state illustrated in FIG. 24, the driven cam 39 presses the piston 36 toward the one side in the axial direction through the pressing member 62 against the elastic restoring force of the elastic member 37. In this state, a portion of the elastic restoring force of the elastic member 37 is supported by the cam device 31 through the pressing member 62 and the thrust bearing 61, and the remainder is supported by the stationary portion 14 through the friction engagement portion 29 and the rotation transmission state switching device 12. As the piston 36 is pressed toward the one side in the axial direction, the force pressing the first friction plates 33 and the second friction plates 34 against each other gradually decreases, mainly based on the elastic restoring force of the second friction plates 34 and the elastic member 37. That is, the fastening force F of the friction engagement portion 29 gradually decreases.

While the fastening force F of the friction engagement portion 29 is gradually reduced, the current value A of the shift motor 70 increases at a substantially constant rate (slope) (range β in FIGS. 22(A) and 22(B)). That is, the rate of increase of the current value A in the range β is greater than the rate of increase of the current value A in the range α.

Therefore, the control device 6, using the piston touch point detection function, detects the phase θ in the rotational direction of the drive cam 38 when the current value A of the shift motor 70 begins to increase at an increase rate equal to or greater than a predetermined first threshold value after energizing the shift motor 70 is started in order to switch the electric friction clutch device 11 from the connected mode to the disconnected mode, which is rotation angle from a reference position (for example, an initial position where the rolling element 40 is located at the bottom portion of the recessed portion), as the piston touch point θₚ at which the piston clearance Cₚ becomes zero. The first threshold value can be determined in advance by experiment, simulation, or the like.

Note that the rate of increase in the current value A is an amount of increase ΔA in the current value A per unit rotation angle Δθ of the drive cam 38. Also note that when the drive cam 38 is rotated in the predetermined direction at a constant rotational speed, the increase ΔA in the current value A per unit time can also be used for the determination.

The fastening force F of the friction engagement portion 29 gradually decreases, and when the fastening force F becomes zero, from that moment, as illustrated in FIG. 25, the clutch clearance C_{f} begins to be generated between the end portion on the other side in the axial direction of the piston 36 and the first friction plate 33 or the second friction plate 34 located at the endmost on the one side in the axial direction. When the clutch clearance C_{f} begins to be generated, almost all of the elastic restoring force of the elastic member 37 is supported by the cam device 31 through the pressing member 62 and the thrust bearing 61. After the clutch clearance C_{f} begins to be generated in this manner, the current value A of the shift motor 70 increases slowly and logarithmically (range γ in FIGS. 22(A) and 22(B)). That is, the rate of increase of the current value A in the range γ is smaller than the rate of increase of the current value A in the range β.

When switching the electric friction clutch device 11 from the connected mode to the disconnected mode, the control device 6 uses the clutch touch point detection function to detect the phase θ in the rotational direction of the drive cam 38 when the rate of increase in the current value A of the shift motor 70 becomes equal to or less than a predetermined second threshold value after the phase in the rotational direction of the drive cam 38 exceeds the piston touch point θₚ, as the clutch touch point θ_{f} at which the clutch clearance C_{f} becomes zero. Note that the second threshold is smaller than the first threshold. The second threshold value can be determined in advance by experiment, simulation, or the like.

Note that the detection of the piston touch point θₚ and the clutch touch point θ_{f} can be performed at any timing as long as the detection does not interfere with the running of the automobile equipped with the two-speed transmission 3. More specifically, the detection can be performed, for example, immediately after an ignition key is turned ON, or when the two-speed transmission is switched from the low reduction ratio mode to the high reduction ratio mode, such as during kickdown acceleration or when the engine brake is activated. However, in a case in which the above operation is attempted while the vehicle is running, there is a problem in that the drive cam 38 cannot be driven at an arbitrary rotational speed. Therefore, it is preferable to detect the piston touch point θₚ and the clutch touch point θ_{f} while the vehicle is stopped, such as immediately after the ignition key is turned ON.

In the drive apparatus for electric vehicle 1 of the present example, when switching between the high reduction ratio mode and the low reduction ratio mode, the control device 6 adjusts the amount of rotation of the drive cam 38, which is driven and rotated by the shift motor 70 through the reducer 71, based on the piston touch point θₚ detected by the piston touch point detection function, the clutch touch point θ_{f} detected by the clutch touch point detection function, or the both. More specifically, for example, in a case in which the rotational torque of the output member 9 is to be maintained approximately constant before and after switching from the high reduction ratio mode to the low reduction ratio mode, in S1, the clutch touch point θ_{f} detected by the clutch touch point detection function is used as the target value for the phase in the rotation direction of the drive cam 38.

In this way, in the drive apparatus for electric vehicle 1 of the present example, even in a case in which the piston touch point θₚ and the clutch touch point θ_{f} change from the initial positions due to wear of the first friction plate 33 and the second friction plate 34, gear shift control can be performed based on a corrected piston touch point θₚ and clutch touch point θ_{f}. Therefore, with the drive apparatus for electric vehicle 1 of the present example, it is possible to prevent the occurrence of gear shift shock regardless of the wear of the first friction plates 33 and the second friction plates 34.

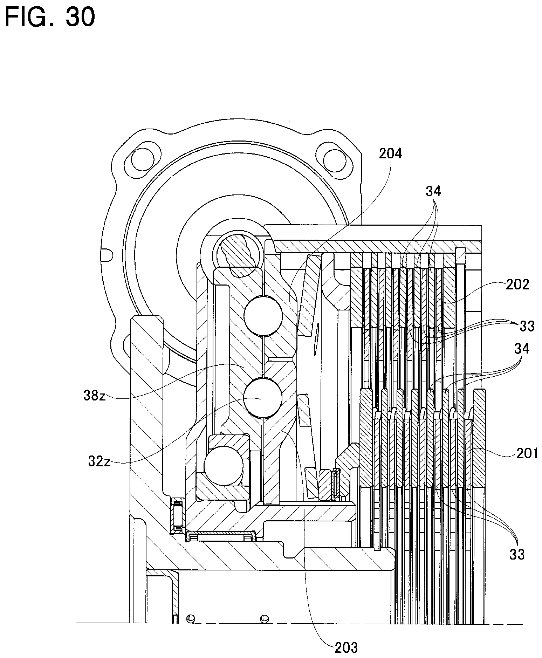

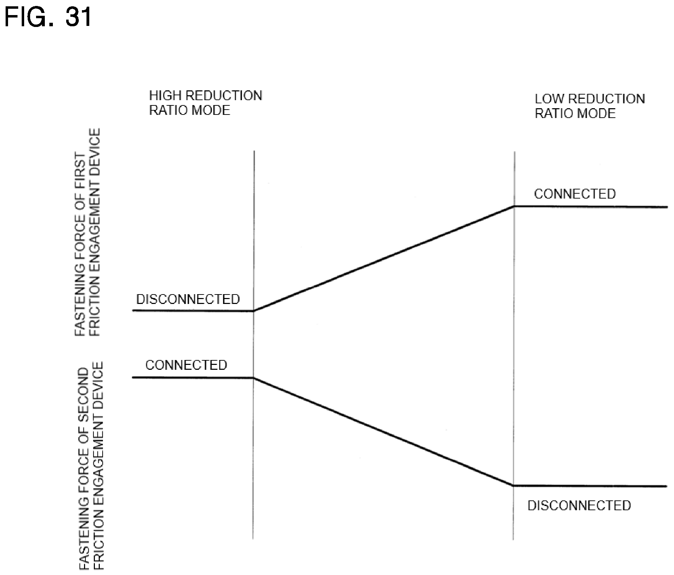

In the drive apparatus for electric vehicle 1 of the present example, the reduction ratio switching mode is passed through during switching from the high reduction ratio mode to the low reduction ratio mode during normal forward driving, and thus torque loss can be suppressed while suppressing the gear shift shock that accompanies the mode switching. The reason for this will be explained with reference to FIGS. 30 and 31.

FIG. 30 illustrates a portion of a two-speed transmission as a comparative example. The two-speed transmission of the comparative example includes: a first friction engagement device 201 that switches whether or not relative rotation is possible between the input member 8 and the rotating member 10, in other words, whether or not relative rotation is possible between the ring gear 105 and the sun gear 104; and a second friction engagement device 202 that switches whether or not rotation of the rotating member 10 relative to the stationary portion 14 is possible, in other words, whether or not rotation of the sun gear 104 is possible. That is, the two-speed transmission of the comparative example employs the second friction engagement device 202, which switches modes by pressing or separating the first friction plates 33 and the second friction plates 34, instead of the rotation transmission state switching device 12 of the two-speed transmission of the present example.

In the comparative example, a drive cam 38z of a cam device 31z is rotationally driven by an electric actuator, and modes of the first friction engagement device 201 and modes of the second friction engagement device 202 are switched based on displacement in the axial direction of a first driven cam 203 and a second driven cam 204. The first driven cam 203 and the second driven cam 204 are displaced in mutually different phases in accordance with rotation of the drive cam 38z (they are displaced (advanced and retreated) in opposite directions in the axial direction).

In the two-speed transmission of the comparative example, during switching from a high reduction ratio mode with a large reduction ratio to a low reduction ratio mode with a small reduction ratio, a fastening force of the first friction engagement device 201 gradually increases and a fastening force of the second friction engagement device 202 gradually decreases, as illustrated in FIG. 31. Therefore, when the fastening force of the second friction engagement device 202 gradually decreases and becomes insufficient during switching from the high reduction ratio mode to the low reduction ratio mode, the sun gear 104 is dragged by the revolution of the planetary gear 107, and a loss of torque occurs between the rotating member 10 and the stationary portion 14.

In addition, in the two-speed transmission of the comparative example, as the fastening force of the first friction engagement device 201 gradually increases, torque applied to the sun gear 104 in a direction opposite to the predetermined direction gradually decreases to zero, and then the direction of the torque applied to the sun gear 104 reverses. However, in the two-speed transmission of the comparative example, at the moment when the direction of the torque applied to the sun gear 104 reverses and the revolution direction of the planetary gear 107 and the rotation direction of the sun gear 104 coincide with each other, the fastening force of the second friction engagement device 202 cannot be made sufficiently large. As a result, the sun gear 104 is dragged relative to the stationary portion 14, causing a loss of torque between the sun gear 104 and the stationary portion 14.

In contrast to this, in the present example, in order to switch from the high reduction ratio mode to the low reduction ratio mode based on the rotation of the drive cam 38, the rotation transmission state switching device 12 is set to the one-way clutch mode before the electric friction clutch device 11 begins to switch from the disconnected mode to the connected mode. Therefore, in order to switch the electric friction clutch device 11 from the disconnected mode to the connected mode, the fastening force F of the friction engagement portion 29 is gradually increased, and at the moment when the direction of the torque applied to the sun gear 104 is reversed, the sun gear 104 is allowed to rotate in the predetermined direction. Therefore, it is possible to suppress torque loss in the two-speed transmission 3 while suppressing the gear shift shock that accompanies mode switching.

Note that the reduction ratio between the input member 8 and the output member 9 in the reduction ratio switching mode is the same as the reduction ratio in the high reduction ratio mode when the fastening force F of the friction engagement portion 29 is small enough that no torque loss occurs at the contact points between both side surfaces in the axial direction of the first friction plates 33 and both side surfaces in the axial direction of the second friction plates 34. On the other hand, when the fastening force F of the friction engagement portion 29 is increased to a magnitude that allows torque to be transmitted without slippage at the contact points between both side surfaces in the axial direction of the first friction plates 33 and both side surfaces in the axial direction of the second friction plates 34, the reduction ratio is the same as the reduction ratio in the low reduction ratio mode, in other words, 1.

When the fastening force F of the friction engagement portion 29 is such that slippage occurs at the contact points between both side surfaces in the axial direction of the first friction plates 33 and both side surfaces in the axial direction of the second friction plates 34, the reduction ratio between the input member 8 and the output member 9 becomes a value that corresponds to the magnitude of the input torque, the rotational speed, or the like.

When the input member 8 is rotating in the forward direction and switching from the high reduction ratio mode to the reduction ratio switching mode is in progress, torque is applied to the second member 75 of the rotation transmission state switching device 12 in the direction opposite to the predetermined direction. Here, in the rotation transmission state switching device 12, rotation of the second member 75 in the direction opposite to the predetermined direction is prevented even during switching from the locked mode to the one-way clutch mode. That is, the reduction ratio between the input member 8 and the output member 9 during the switching from the high reduction ratio mode to the reduction ratio switching mode is the same as the reduction ratio in the high reduction ratio mode.

When the input member 8 is rotating in the forward direction and the mode is being switched from the reduction ratio switching mode to the low reduction ratio mode, torque is applied to the second member 75 of the rotation transmission state switching device 12 in the predetermined direction. Here, in the rotation transmission state switching device 12, rotation of the second member 75 in the predetermined direction is allowed even during switching from the one-way clutch mode to the free mode.

Note that when the input member 8 rotates in the reverse direction, that is, when an automobile equipped with the drive apparatus for electric vehicle 1 of the present embodiment is moving backward, the automobile rarely travels at high speed. Therefore, in a case in which the input member 8 is rotating in the reverse direction, when switching from the high reduction ratio mode to the low reduction ratio mode, there is little need to switch to the reduction ratio switching mode that allows rotation of the sun gear 104 at the moment the direction of the torque applied to the sun gear 104 is reversed by the electric friction clutch device 11 being set to the one-way clutch mode as is the case when rotating in the forward direction,. In addition, even in a case in which the input member 8 rotates in the forward direction, when switching from the low reduction ratio mode to the high reduction ratio mode, the vehicle is mainly in a decelerating state. In this case, power is not transmitted from the input member 8 to the output member 9, and thus there is little need to switch the two-speed transmission 3 to the reduction ratio switching mode.

Next, the cooperative control function provided in the control device 6 will be described. In a case in which torque is passing through the two-speed transmission 3 from the output member 9 side to the input member 8 side, the torque is applied to the first member 74 that tends to rotate the first member 74 toward the one side in the circumferential direction relative to the second member 75, and the rotation transmission state switching device 12 prevents the first member 74 from rotating toward the one side in the circumferential direction relative to the second member 75, the cooperative control function executes a pre-shift process in which the regenerative torque of the drive motor 2 is reduced while the braking force of the friction brake device 5 is increased before the second engaging pawl 97 is pressed in the radial direction by the protruding portions 100 to retract the second engaging pawl 97 from the engaging recessed portions 77 in response to switching of the modes of the two-speed transmission 3 by the reduction ratio switching function.

In other words, when torque is being transmitted through the two-speed transmission 3 from the output member 9 side to the input member 8 side, that is, in a case in which the two-speed transmission 3 is to be switched from the high reduction ratio mode to the low reduction ratio mode during regenerative driving of the vehicle, the electric friction clutch device 11 must be switched from the disconnected mode to the connected mode, and the rotation transmission state switching device 12 must be switched from the locked mode to the one-way clutch mode, and then to the free mode.

Here, when a vehicle equipped with the drive apparatus for electric vehicle 1 is driving forward in a regenerative manner in the high reduction ratio mode, a torque is applied to the first member 74 of the rotation transmission state switching device 12, which tends to rotate the first member 74 toward the one side in the circumferential direction relative to the second member 75. Therefore, a side surface of the inner side surface of any of the engaging recessed portions 77 provided in the first member 74, the side surface facing toward the one side in the circumferential direction, is pressed against the tip-end surface of the second engaging pawl 97. Therefore, when the two-speed transmission 3 is switching from the high reduction ratio mode to the low reduction ratio mode, in order to switch the rotation transmission state switching device 12 from the locked mode to the one-way clutch mode, the force required to press the second engaging pawl 97 outward in the radial direction by the protruding portions 100 of the mode selecting member 76 may become excessively large in order to disengage the engaging recessed portions 77 from the second engaging pawl 97.

Therefore, in the drive apparatus for electric vehicle 1 of the present example, when the rotation transmission state switching device 12 is switched from the lock mode to the one-way clutch mode while the two-speed transmission 3 is switching from the high reduction ratio mode to the low reduction ratio during regenerative driving of the vehicle, the cooperative control function coordinates the regenerative torque T₂ of the drive motor 2 and the braking force BF of the friction brake device 5, thereby preventing the force required to switch the mode of the rotation transmission state switching device 12 from becoming excessive and suppressing or preventing the occupants from feeling uncomfortable.

In the drive apparatus for electric vehicle 1 of the present example, the VCU 116 controls the rotational speed and torque of the drive motor 2 through the inverter 115 based on signals from various sensors, controls the modes of the electric friction clutch device 11 and the modes of the rotation transmission state switching device 12 through the TCU 114, and controls the braking force of the friction brake device 5, thereby performing a cooperative control function.

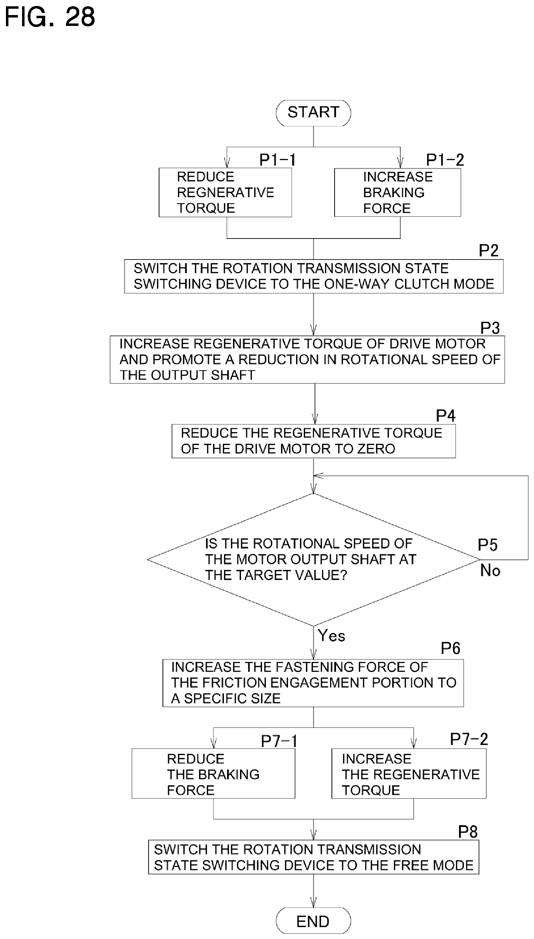

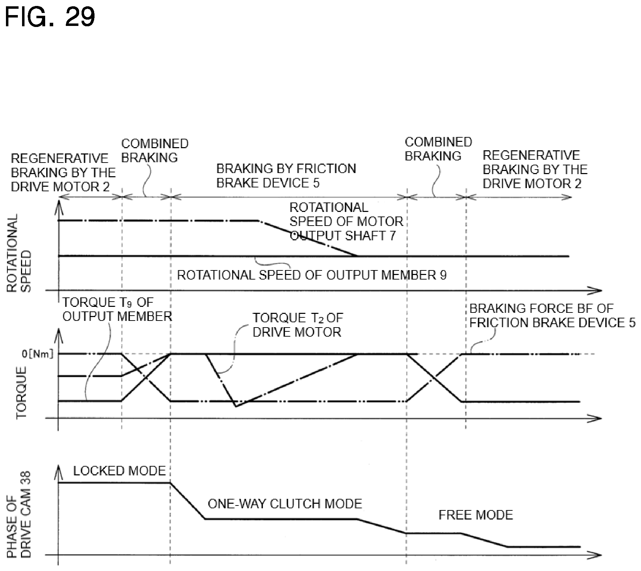

A method for switching the two-speed transmission 3 from the high reduction ratio mode to the low reduction ratio mode while executing a cooperative control that coordinates the rotational speed and torque of the drive motor 2, the modes of the electric friction clutch device 11, the modes of the rotation transmission state switching device 12, and the braking force of the friction brake device 5, in a state in which torque is being transmitted through the two-speed transmission 3 from the output member 9 side to the input member 8 side, will be described using FIGS. 28 and 29. The following example is an example in which the rotational speed of the output member 9 is maintained substantially constant before and after switching from the high reduction ratio mode to the low reduction ratio mode.

In a state where torque is being transmitted through the two-speed transmission 3 from the output member 9 side to the input member 8 side, that is, during regenerative driving of the vehicle, when the reduction ratio switching function initiates switching from the high reduction ratio mode to the low reduction ratio mode based on conditions such as the vehicle's driving speed, and first, as a pre-shift process, the control device 6 controls the drive motor 2 and the friction brake device 5 in coordination. More specifically, by controlling the supply of electricity to the drive motor 2, the regenerative torque T₂ generated by the drive motor 2 is reduced (P1-1), and the braking force BF generated by the friction brake device 5 is increased (P1-2). Here, when the regenerative torque T₂ by the drive motor 2 is reduced, torque T₉ passing through the output member 9 in a direction from the drive wheel 108 side toward the drive motor 2 side also decreases.

More specifically, in the present example, the regenerative torque T₂ from the drive motor 2 is reduced to zero, while the braking force BF from the friction brake device 5 is increased so that the rotational speed Rₒᵤₜ of the output member 9 is maintained approximately constant.

In the present example, the regenerative torque T₂ from the drive motor 2 is reduced to zero; however, when implementing the drive apparatus for electric vehicle according to the present disclosure, in the next first mode switching process (P2), the regenerative torque T₂ can be made to be greater than zero as long as the force required to switch the rotation transmission state switching device 12 from the locked mode to the one-way clutch mode, that is, the force required to rotate the mode selecting member 76 so that the protruding portions 100 push only the second engaging pawl 97 outward in the radial direction against the elastic force of the second pawl biasing member 92, can be reduced.

In FIG. 29, a negative value of T₂ means a regenerative torque. Increasing the regenerative torque means increasing T₂ in the negative direction (increasing the absolute value of the negative value), and decreasing the regenerative torque means bringing the value of T₂ closer to zero (decreasing the absolute value of the negative value).

Also, in FIG. 29, in order to make it easier to understand the invention, a braking force BF by the friction brake device 5 is represented as a negative value, and increasing the braking force BF means increasing the braking force BF in the negative direction (increasing the absolute value of the negative value). In FIG. 29, the torque T₉ of the output member 9 having a negative value means that the torque passes through the output member 9 in a direction from the drive wheel 108 side toward the drive motor 2 side.

During the pre-shift process in which the regenerative torque T₂ from the drive motor 2 is reduced while the braking force BF from the friction brake device 5 is increased, the drive wheels 108 are decelerated by the combined braking force of the regenerative torque T₂ (regenerative braking force) from the drive motor 2 and the friction braking force BF from the friction brake device 5. After the regenerative torque T₂ by the drive motor 2 becomes zero, the drive wheels 108 are decelerated by the friction braking force BF by the friction brake device 5.

In the next first mode switching process (P2), the mode selecting member 76 is rotated based on the rotational driving of the drive cam 38 by the electric actuator 32, thereby switching the rotational transmission state switching device 12 from the locked mode to the one-way clutch mode.

That is, as illustrated in FIGS. 20(B) and 20(C) in that order, the circumferential phase of the mode selecting member 76 relative to the second member 75 is adjusted, and the protruding portions 100 push only the second engaging pawl 97 outward in the radial direction against the elastic force of the second pawl biasing member 92, causing the second engaging pawl 97 to retract from the engaging recessed portions 77. Thus the rotation transmission state switching device 12 switches to the one-way clutch mode that allows only the first member 74 to rotate in the predetermined direction (clockwise direction in FIG. 20(C)) relative to the second member 75, and prevents rotation in the direction opposite to the predetermined direction.

After the rotation transmission state switching device 12 is switched to the one-way clutch mode, the process moves to the next inertia process (P3 to P4).

In the inertia process, first, the regenerative torque T₂ of the drive motor 2 is increased by controlling the energization of the drive motor 2, thereby promoting a decrease in the rotational speed Rₛ of the motor output shaft 7 (P3).

The speed and amount of increase in the regenerative torque T₂ by the drive motor 2 are not particularly limited as long as they can promote a decrease in the rotational speed Rₛ of the motor output shaft 7. However, in order to quickly reduce the rotational speed Rₛ of the motor output shaft 7 in order to quickly switch modes of the two-speed transmission 3, it is preferable to increase the regenerative torque T₂ as quickly as possible within a range that does not place an excessively large load on the drive motor 2.

When the rotational speed Rₛ of the motor output shaft 7 starts to decrease, the regenerative torque T₂ by the drive motor 2 is reduced (P4). More specifically, the regenerative torque T₂ from the drive motor 2 is reduced so that the regenerative torque T₂ from the drive motor 2 becomes zero when the rotational speed Rₛ of the motor output shaft 7 decreases to a predetermined target value. More specifically, in the present example, the regenerative torque T₂ by the drive motor 2 is reduced so that the regenerative torque T₂ by the drive motor 2 becomes zero when the rotational speed Rₛ of the motor output shaft 7 decreases to the rotational speed Rₒᵤₜ of the output member 9 before the mode switching of the two-speed transmission 3 begins.

In the next inertia phase end determination process (P5), it is determined whether or not the inertia phase has ended. More specifically, it is determined whether the rotational speed Rₛ of the motor output shaft 7 detected by the input rotation sensor 112 is equal to a target value. Even more specifically, in the present example, it is determined whether the rotational speed Rₛ of the motor output shaft 7 is the rotational speed Rₒᵤₜ of the output member 9 before the mode switching of the two-speed transmission 3 begins.

In a case in which it is determined that the rotational speed Rₛ of the motor output shaft 7 has not arrived at the target value, the torque phase end determination process (P5) is executed again after a predetermined time has elapsed.

In a case in which it is determined that the rotational speed Rₛ of the motor output shaft 7 has arrived at the target value, it is determined that the inertia process has ended, and the process moves to the next shift completion process (P6 to P8).

In the shift completion process, first, the drive cam 38 is rotated by the electric actuator 32, and the fastening force F of the friction engagement portion 29 of the electric friction clutch device 11 is increased to a predetermined magnitude (P6). More specifically, the fastening force F of the friction engagement portion 29 is increased until torque that can be transmitted without the first friction plate 33 and the second friction plate 34 slipping against each other is greater than or equal to torque that passes through the friction engagement portion 29 after the two-speed transmission 3 has completely switched to the low reduction ratio mode, and preferably greater than torque that passes through the friction engagement portion 29 after the two-speed transmission 3 has completely switched to the low reduction ratio mode.

Next, the braking force BF by the friction brake device 5 is decreased (P7-1), while the regenerative torque T₂ by the drive motor 2 is increased (P7-2). More specifically, when the braking force BF of the friction brake device 5 becomes zero, the regenerative torque T₂ of the drive motor 2 is increased until the magnitude of the rotational torque T9 of the output member 9 becomes approximately the same as the magnitude of the rotational torque T9 of the output member 9 at the time when the mode switching of the two-speed transmission 3 is started.

While the braking force BF by the friction brake device 5 is reduced and the regenerative torque T₂ by the drive motor 2 is increased, the drive wheels 108 are decelerated by a combined braking force of the regenerative torque T₂ (regenerative braking force) by the drive motor 2 and the friction braking force BF by the friction brake device 5. After the braking force BF of the friction brake device 5 becomes zero, the regenerative torque T₂ (regenerative braking force) of the drive motor 2 decelerates the drive wheels 108.

After reducing the braking force BF by the friction brake device 5 to zero, the drive cam 38 is rotated by the electric actuator 32 and the rotation transmission state switching device 12 is switched to the free mode, thereby completing the switching of the two-speed transmission 3 to the low reduction ratio mode (P8), and then the process ends.

In the drive apparatus for electric vehicle 1 of the present example, during regenerative driving of the vehicle, in order to switch the two-speed transmission 3 from the high reduction ratio mode to the low reduction ratio mode, the regenerative torque T₂ generated by the drive motor 2 is reduced before the rotation transmission state switching device 12 is switched from the locked mode to the one-way clutch mode. Therefore, the force that presses the side surface facing the one side in the circumferential direction of the inner surface of the engaging recessed portion 77 provided in the first member 74 against the tip-end surface of the second engaging pawl 97 can be reduced.

More specifically, in the present example, before the rotation transmission state switching device 12 is switched from the locked mode to the one-way clutch mode, the regenerative torque T₂ generated by the drive motor 2 is set to zero, and thus the force that presses the side surface facing the one side in the circumferential direction of the inner surface of the engaging recessed portion 77 against the tip-end surface of the second engaging pawl 97 can be eliminated.

In the present example, the force that presses the side surface facing the one side in the circumferential direction of the inner surface of the engaging recessed portion 77 against the tip-end surface of the second engaging pawl 97 can be reduced or eliminated, and thus the force required to press the second engaging pawl 97 outward in the radial direction by the protruding portions 100 of the mode selecting member 76 can be reduced to a small value in order to disengage the engaging recessed portions 77 from the second engaging pawl 97 in order to switch the rotation transmission state switching device 12 from the locked mode to the one-way clutch mode. As a result, even when the two-speed transmission 3 is switched from the high reduction ratio mode to the low reduction ratio mode during regenerative driving of the vehicle, the mode switching of the rotation transmission state switching device 12 can be performed smoothly.

In addition, in the drive apparatus for electric vehicle 1 of the present example, in a state where the two-speed transmission 3 is switching from the high reduction ratio mode to the low reduction ratio mode during regenerative driving of the vehicle, before the rotation transmission state switching device 12 is switched from the locked mode to the one-way clutch mode, the braking force BF applied to the drive wheels 108 by the friction brake device 5 is increased in coordination with the reduction in the regenerative torque T₂ by the drive motor 2. Therefore, even in a case in which the regenerative torque T₂ from the drive motor 2 is reduced, it is possible to suppress or prevent the feeling of loss of deceleration acceleration (deceleration G), thereby suppressing or preventing discomfort felt by the driver and other passengers.

In this example, the two-speed transmission 3 is switched from the high reduction ratio mode to the low reduction ratio mode while torque is being transmitted from the output member 9 side to the input member 8 side, and the rotational speed of the output member 9 is maintained approximately constant before and after the mode switching of the two-speed transmission 3. However, when implementing the technique according to the present disclosure, the rotational speed of the output member can also be changed before and after the mode switching of the two-speed transmission. More specifically, by adjusting the regenerative torque of the drive motor, the braking force of the friction brake device, or the both, it is possible to adjust the rotational speed of the output member after the mode of the two-speed transmission is switched.

In addition, the drive apparatus for electric vehicle 1 of the present example can ensure good torque transmission efficiency. The reason for this will be explained next.

In a state in which the cam device 31 generates a pressing force, that is, in a state in which the driven cam 39 presses the piston 36 toward the one side in the axial direction through the thrust bearing 61 and the pressing member 62 (state illustrated in FIG. 3(B)), a force directed toward the one side in the axial direction is applied to the thrust bearing 61. Moreover, a reaction force caused by the piston 36 being pressed toward the one side in the axial direction by the driven cam 39 is applied to the radial bearing 42 toward the other side in the axial direction through the rolling elements 40 and the driving cam 38.

The raceway ring 63a on the one side in the axial direction of the thrust bearing 61 is supported by the rotating member 10 through the pressing member 62 and the piston 36, and the raceway ring 63b on the other side in the axial direction is supported by the stationary portion 14 through the cam device 31, the angular ball bearing 43, and the cylindrical member 41. In addition, the inner ring 46 of the radial bearing 42 is externally fitted and fixed to the rotating member 10, and the outer ring 47 is supported by the drive cam 38 of the cam device 31 through the cylindrical member 41 and the angular ball bearing 43.

Here, in the present example, in a state in which the cam device 31 generates a pressing force, that is, in a state in which the piston 36 is pressed toward the one side in the axial direction, the axial dimension of the elastic member 37 elastically contracts, the force pressing the first friction plate 33 and the second friction plate 34 against each other is released, and electric friction clutch device 11 is disconnected, the rotation transmission state switching device 12 enters the locked mode. In the high reduction ratio mode in which the electric friction clutch device 11 is disengaged and the rotation transmission state switching device 12 is switched to the locked mode, the relative rotation of the rotating member 10 relative to the stationary portion 14 is prevented. In this state, the raceway ring 63a on the one side in the axial direction and the raceway ring 63b on the other side in the axial direction of the thrust bearing 61 do not rotate relative to each other, and the inner ring 46 and the outer ring 47 of the radial bearing 42 do not rotate relative to each other.

In short, in a state in which forces in the axial direction (left and right direction in FIG. 2(B)) are applied to the thrust bearing 61 and the radial bearing 42 and rolling resistance increases, the raceway ring 63a on the one side in the axial direction, and the raceway ring 63b on the other side in the axial direction of the thrust bearing 61 do not rotate relative to each other, and the inner ring 46 and the outer ring 47 of the radial bearing 42 do not rotate relative to each other. Therefore, torque loss in the thrust bearing 61 and the radial bearing 42 can be prevented.

The pressing force generated by the cam device 31 is applied from the driven cam 39 to the rotating member 10 in a direction toward the one side in the axial direction through the pressing member 62, thrust bearing 61, piston 36, and elastic member 37. In contrast to this, a reaction force generated by the pressing force generated by the cam device 31 is applied from the drive cam 38 to the rotating member 10 through the radial bearing 42 in a direction toward the other side in the axial direction. In this way, the forces in the axial direction generated by the pressing force of the cam device 31 are cancelled out (cancelled) within the rotating member 10.

On the other hand, in a state in which the rotation transmission state switching device 12 is switched to the free mode and the relative rotation of the rotating member 10 relative to the stationary portion 14 is allowed (state illustrated in FIG. 3(A)), the electric friction clutch device 11 is connected and the cam device 31 does not generate a pressing force. In this state, no force in the axial direction (left and right in FIG. 3(A)) is applied to the thrust bearing 61 and the radial bearing 42 due to the pressing force generated by the cam device 31, so rolling resistance of the thrust bearing 61 and the radial bearing 42 does not increase unnecessarily, and torque loss does not become excessively large.

In short, in the drive apparatus for electric vehicle 1 of the present example, except for a short period during mode switching, the thrust bearing 61 and the radial bearing 42 do not rotate when the forces in the axial direction caused by the pressing force generated by the cam device 31 are applied and the rolling resistance becomes large. Therefore, it is possible to prevent excessive torque loss from occurring in the thrust bearing 61 and the radial bearing 42, and to ensure good torque transmission efficiency of the two-speed transmission 3.

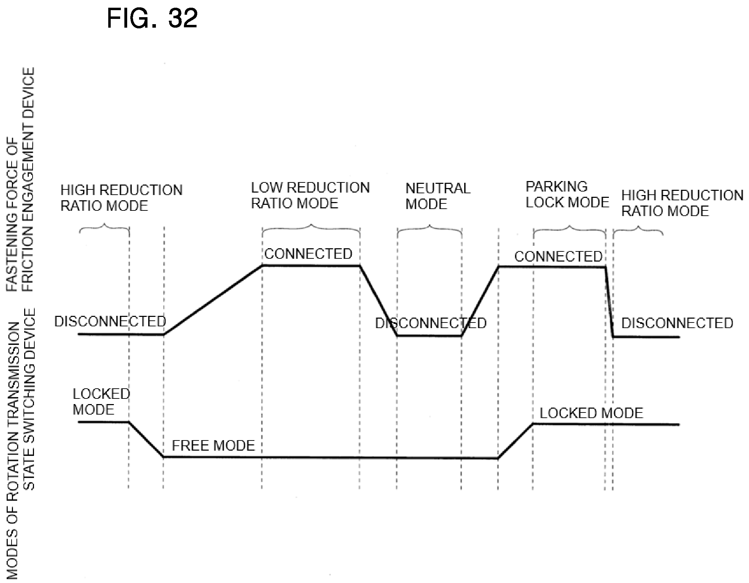

The two-speed transmission according to the present disclosure can also be applied to a structure that does not have a one-way clutch mode, that is, a structure that includes a rotation transmission state switching device that has only a free mode and a locked mode. In such a modification, when switching from the high reduction ratio mode to the low reduction ratio mode, as illustrated in FIG. 32, the rotation transmission state switching device is switched from the locked mode to the free mode, and then the electric friction clutch device is switched from the disconnected mode to the connected mode.

With the two-speed transmission 3 according to the present example, the driven cam 39 can be reliably displaced in the axial direction based on the rotation of the drive cam 38, and the mode switching of the two-speed transmission 3 can be performed with high precision.

In other words, in a case in which balls are used as the rolling elements of the cam device, and the drive cam is rotated, slippage may occur at a rolling contact area between the surfaces of the rolling elements and the drive cam surface. In a case in which slippage occurs at the rolling contact area between the surfaces of the rolling elements and the drive cam surface, the driven cam may not be able to displace in the axial direction, or the amount of displacement in the axial direction of the driven cam relative to the amount of rotation of the drive cam may not be sufficiently ensured.

In contrast, in the two-speed transmission 3 of the present example, rollers are used as the rolling elements 40, and the rolling elements 40 are supported against the driven cam 39 to rotate (spin) freely around a rotation axis C oriented in a radial direction from the central axis of the driven cam 39. Therefore, in a case in which the drive cam 38 is rotated, slippage can be prevented from occurring at the rolling contact area between the outer peripheral surfaces of the rolling elements 40 and the drive cam surface 52, and the driven cam 39 can be reliably displaced in the axial direction by rotating the drive cam 38. As a result, the modes of the two-speed transmission 3 can be switched with high precision. However, as mentioned above, balls can also be used as the rolling elements of the cam device.

### [Second Example]

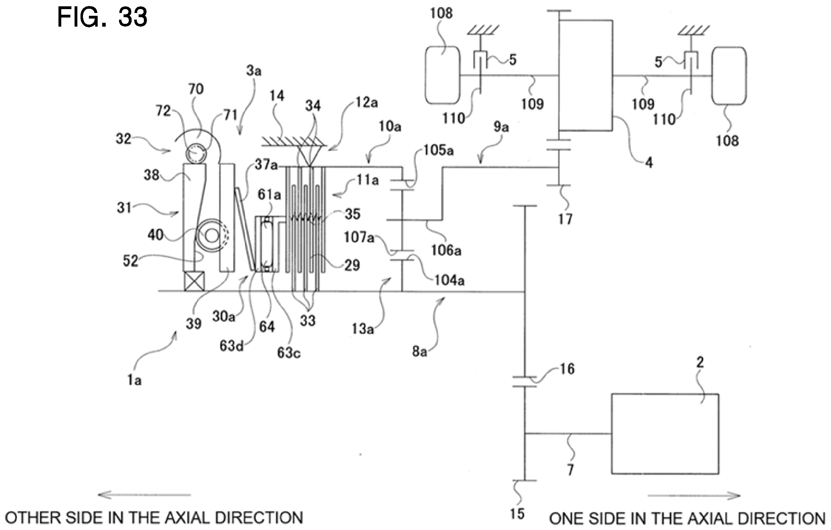

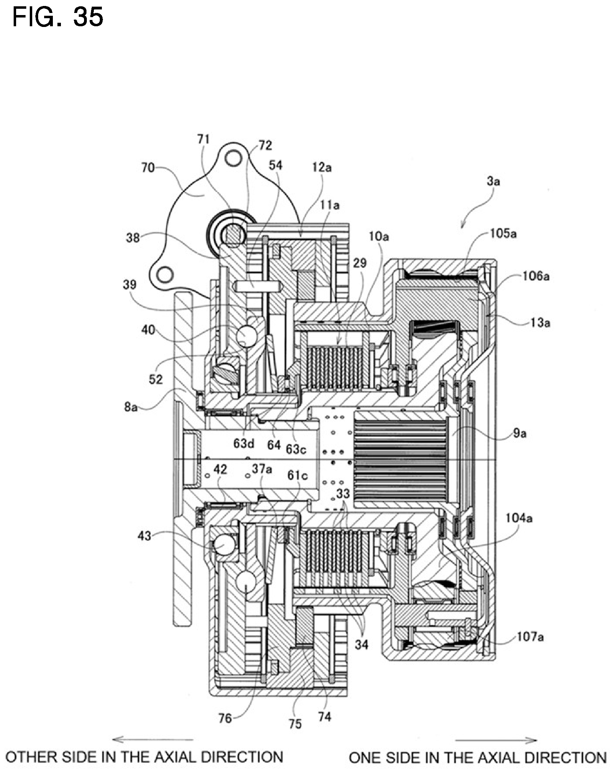

A second example of an embodiment according to the present disclosure will be described with reference to FIGS. 33 to 35. In a drive apparatus for electric vehicle 1a of the present example, the structure of a two-speed transmission 3a is different from the structure of the two-speed transmission 3 of the first embodiment.

In the present example, the two-speed transmission 3a includes an input member 8a, an output member 9a, a rotating member 10a, an electric friction clutch device 11a, a rotation transmission state switching device 12a, and a planetary gear mechanism 13a.

In the present example, the electric friction clutch device 11a is provided between the rotating member 10a and the input member 8a, and switches between a connected mode in which torque is transmitted between the rotating member 10a and the input member 8a, and a disconnected mode in which torque is not transmitted. That is, in the present example, a second clutch member rotates integrally with the input member 8a. More specifically, the second clutch member is configured by the input member 8a. In addition, a first clutch member is configured by the rotating member 10a.

In addition, in the present example, the electric friction clutch device 11a is provided with an elastic biasing mechanism 30a that is arranged between a friction engagement portion 29 and a driven cam 39 of a cam device 31 and elastically biases the friction engagement portion 29 and the driven cam 39 in directions away from each other.

The elastic biasing mechanism 30a has, between the friction engagement portion 29 and the driven cam 39, an elastic member 37a and a thrust bearing 61a in this order from the driven cam 39 side.

The elastic member 37a is configured by a single disc spring.

The thrust bearing 61a has a pair of raceway rings 63c, 63d and a plurality of rolling elements 64 arranged to roll freely between the pair of raceway rings 63c, 63d.

In the present example, in a case in which the electric friction clutch device 11a is switched to a disconnected mode in which torque is not transmitted between the rotating member 10a and the input member 8a, the drive cam 38 is driven and rotated by an electric actuator 32, thereby moving the driven cam 39 in a direction that reduces a distance in the axial direction between the driven cam 39 and the drive cam 38. As a result, a force pressing a first friction plate 33 and a second friction plate 34 against each other is lost. As a result, the return spring 35 acts to widen the distance between the first friction plate 33 and the second friction plate 34, disengaging the friction engagement portion 29, and switching the electric friction clutch device 11 to the disconnected mode.

In contrast, in a case in which the electric friction clutch device 11a is switched to the connected mode in which torque is transmitted between the rotating member 10a and the input member 8a, the drive cam 38 is rotationally driven by the electric actuator 32, thereby moving the driven cam 39 in a direction in which the distance in the axial direction between the driven cam 39 and the drive cam 38 increases. As a result, the driven cam 39 presses the first friction plate 33 and the second friction plate 34 in directions in which they are pressed against each other through the elastic member 37a and the thrust bearing 61a. As a result, the first friction plate 33 and the second friction plate 34 are pressed against each other, the friction engagement portion 29 is connected, and the electric friction clutch device 11a is switched to the connected mode.

In the present example, in a case in which the electric friction clutch device 11a is to be maintained in the connected mode, it is necessary to continue to energize a shift motor 70. On the other hand, in a case in which the electric friction clutch device 11a is maintained in the disconnected mode, it is not necessary to continue to energize the shift motor 70. That is, the electric friction clutch device 11 of the present example is configured as a normally open type clutch device.

In the present example, the planetary gear mechanism 13a is configured as a single-pinion planetary gear mechanism. In the present example, a carrier 106a is connected to the output member 9a so as to rotate integrally with the output member 9a, a sun gear 104a is connected to the input member 8a so as to rotate integrally with the input member 8a, and a ring gear 105a is connected to the rotating member 10a so as to rotate integrally with the rotating member 10a.

In the drive apparatus for electric vehicle 1a of the present example, the control device 6 also has a reduction ratio switching function that switches the two-speed transmission 3a between a high reduction ratio mode in which the reduction ratio between the input member 8a and the output member 9a is large, and a low reduction ratio mode in which the reduction ratio is small.

### <Low Reduction Ratio Mode>

In order to switch the two-speed transmission 3a to the low reduction ratio mode, the electric friction clutch device 11a is switched to the connected mode. As a result, the input member 8a and the rotating member 10a rotate integrally, and the sun gear 104a and the ring gear 105a rotate integrally. In addition, the rotation transmission state switching device 12a is switched to the free mode. Thus, the rotation of the rotating member 10a relative to the stationary portion 14 is allowed, and the rotation of the ring gear 105a is allowed.

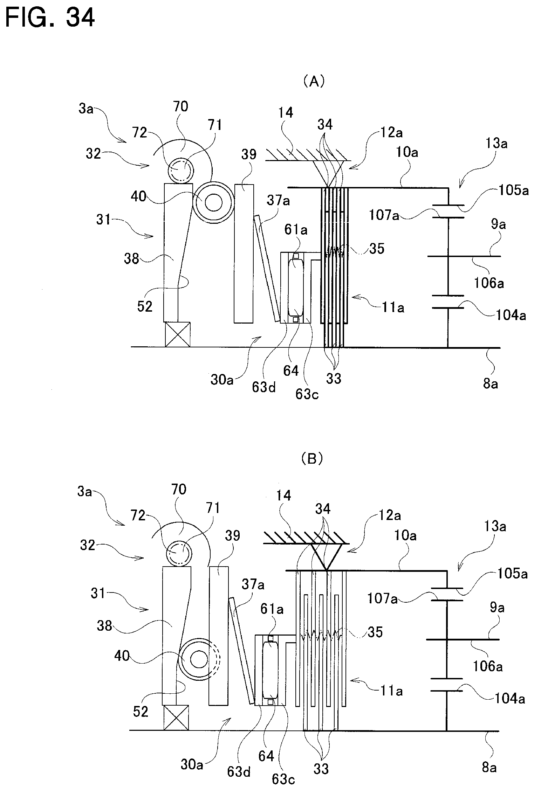

In the low reduction ratio mode, the sun gear 104a, ring gear 105a, and carrier 106a rotate in the same direction and at the same speed, and the entire planetary gear mechanism 13a rotates as a single unit, in a so-called glued state. Therefore, the rotational torque of the input member 8a is transmitted in order of the input member 8a, the carrier 106a, and the output member 9a, as indicated by the thick line in FIG. 34(A), and is extracted from the output member 9a.

### <High Reduction Ratio Mode>

In order to switch the two-speed transmission 3a to the low reduction ratio mode, the electric friction clutch device 11a is switched to the disconnected mode. Thus, it is possible for the input member 8a and the rotating member 10a to rotate relative to each other, and the sun gear 104a and the ring gear 105a to rotate relative to each other. In addition, the rotation transmission state switching device 12a is switched to the locked mode. Thus, the rotation of the rotating member 10a relative to the stationary portion 14 is prevented, and the rotation of the ring gear 105a is prevented.

In the high reduction ratio mode, the rotational torque of the input member 8a is transmitted in the following order: input member 8a, sun gear 104a, rotational motion of planetary gear 107a, orbital motion of planetary gear 107a based on engaging with the ring gear 105a, carrier 106a, and output member 9a, as illustrated in Figure 34(B), and is then extracted from output member 9a.

In the present example, the two-speed transmission 3a can also be switched among a reduction ratio switching mode, a neutral mode, and a parking mode.

In a state in which torque is passing through the two-speed transmission 3a from the output member 9a side to the input member 8a side, torque is applied to the first member 74 that tends to rotate the first member 74 toward one side in the circumferential direction relative to the second member 75, and the rotation transmission state switching device 12a prevents the first member 74 from rotating toward the one side in the circumferential direction relative to the second member 75, the control device 6 has a cooperative control function that executes a pre-shift process in which regenerative torque of the drive motor 2 is reduced while increasing the braking force of the friction brake device 5, before the second engaging pawl 97 is pressed in the radial direction by the protruding portions 100 to retract from the engaging recessed portions 77 in response to mode switching of the two-speed transmission 3a by the reduction ratio switching function. This allows the mode switching of the rotation transmission state switching device 12a to be performed smoothly even during regenerative driving in which regenerative torque acts on the drive motor 2.

Other configurations and effects of the second example are the same as those of the first example.

### REFERENCE SIGNS

1, 1a Drive apparatus for electric vehicle
2 Drive motor
3, 3a Two-speed transmission
4 Torque transmission mechanism
5 Friction brake device
6 Control device
7 Motor output shaft
8, 8a Input member
9, 9a Output member
10, 10a Rotating member
11, 11a Electric friction clutch device
12, 12a Rotation transmission state switching device
13, 13a Planetary gear mechanism
14 Stationary portion
15 Drive gear
16 Input gear
17 Output gear
18 Small-diameter flange portion
19 Flange portion
20 Through hole
21 First circular ring portion
22 First cylindrical portion
23 Second circular ring portion
24 Second cylindrical portion
25 Shaft member
26 Stepped cylindrical member
27 Small-diameter cylindrical portion
28 Female spline portion
29 Friction engagement portion
30, 30a Elastic biasing mechanism
31, 31a Cam device
32 Electric actuator
33 First friction plate
34 Second friction plate
35 Return spring
36 Piston
37, 37a Elastic member
38, 38z Drive cam
39 Driven cam
40 Rolling elements
41 Cylindrical member
42 Radial bearing
43 Angular ball bearing
44 Cylindrical portion
45 Outward-facing flange portion
46 Inner ring
47 Outer ring
48 Rolling element
49 Inner ring
50 Outer ring
51 Ball
52 Drive cam surface
52a First bottom portion
52b Gentle inclined surface portion
52c First flat surface portion
52d Inclined surface portion
52e Second bottom portion
52f First medium inclined surface portion
52g Second flat surface portion
52h Second medium inclined surface portion
53 Wheel teeth
54 Pin portion
55 Female spline portion
56 Male spline portion
57 Rectangular hole
58a, 58b Support plate portion
59 Support hole
60 Support recessed portion
61, 61a Thrust bearing
62 Pressing member
63a, 63b, 63c, 63d Raceway ring
64 Rolling element
65 Preload applying means
66 Base portion
67 Partial cylindrical portion
68 Support shaft
69 Roller
70 Shift motor
71 Reducer
72 Worm
73a, 73b Support bearing
74 First member
75 Second member
76 Mode selecting member
77 Engaging recessed portion
78 Protruding portion
79 Recessed and protruding portion
80 Outer diameter side recessed-protruding engaging portion
81 Inner diameter side recessed-protruding engaging portion
82 Inner diameter side recessed-protruding engaging portion
83 Base portion
84 Cylindrical portion
85 First holding recessed portion
86 Second holding recessed portion
87a, 87b Spring holding portion
88a, 88b Seat portion
89 First pawl member
90 Second pawl member
91 First pawl biasing member
92 Second pawl biasing member
93 First base portion
94 First engaging pawl
95 Annular protruding portion
96 Second base portion
97 Second engaging pawl
98 Base portion
99 Plate-side engaging hole
100 Protruding portion
101 Recessed and protruding portion
102 Cover body
103 Retaining ring
104, 104a Sun gear
105, 105a Ring gear
106, 106a Carrier
107 Planetary gear
108 Drive wheel
109 Drive shaft
110 Braking rotating body
111 Accelerator position sensor
112 Input rotation sensor
113 Output rotation sensor
114 TCU
115 Inverter
116 VCU
117 Ring gear
201 First friction engagement device
202 Second friction engagement device
203 First driven cam
204 Second driven cam

## Claims

1. A drive apparatus for electric vehicle comprising:
a drive motor having a motor output shaft;
a two-speed transmission including an input member capable of transmitting torque between the input member and the motor output shaft, an output member supported so as to be rotatable relative to the input member, a rotating member supported so as to be rotatable relative to the input member and the output member, an electric friction clutch device, and a rotation transmission state switching device;
a torque transmission mechanism configured to transmit torque between the output member and drive wheels;
a friction brake device arranged between the output member and the drive wheels and configured to brake rotation of the drive wheels; and
a control device; wherein
the electric friction clutch device includes:
a first clutch member configured to rotate integrally with the rotating member or configured by the rotating member;
a second clutch member supported coaxially with the first clutch member so as to be capable of relative rotation with respect to the first clutch member, and rotating integrally with the input member or the output member, or configured by the input member or the output member;
a friction engagement portion including at least one first friction plate and at least one second friction plate supported to allow relative displacement therebetween in an axial direction, and provided between the first clutch member and the second clutch member;
a cam device including a drive cam and a driven cam supported so as to be capable of relative rotation and displacement in the axial direction with respect to the drive cam, and configured to expand or contract a distance in the axial direction between the drive cam and the driven cam as the drive cam rotates; and
an electric actuator having a shift motor and a reducer, the shift motor rotationally driving the drive cam through the reducer; and
the electric friction clutch device is configured to switch modes thereof based on expansion and contraction of a dimension in the axial direction of the cam device between a connected mode in which torque is transmitted between the first clutch member and the second clutch member by pressing the at least one first friction plate and the at least one second friction plate against each other, and a disconnected mode in which torque is not transmitted between the first clutch member and the second clutch member by releasing a force pressing the at least one first friction plate and the at least one second friction plate against each other;
the rotation transmission state switching device includes:
a first member having engaging recessed portions at a plurality of locations in a circumferential direction;
a second member arranged coaxially with the first member;
a mode selecting member having protruding portions protruding in a radial direction or the axial direction at a plurality of locations in the circumferential direction, and configured to rotate or displace in the axial direction as the drive cam rotates;
a first pawl member having a first base portion pivotally supported by the second member, and a first engaging pawl extending from the first base portion toward a first side in the circumferential direction;
a second pawl member having a second base portion pivotally supported by the second member, and a second engaging pawl extending from the second base portion toward a second side in the circumferential direction;
a first pawl biasing member configured to elastically bias the first engaging pawl in a direction to engage with the engaging recessed portions; and
a second pawl biasing member configured to elastically bias the second engaging pawl in a direction to engage with the engaging recessed portions; and
one member of the first member and the second member rotates integrally with the rotating member, or is configured by the rotating member, and the other member of the first member and the second member is supported so as not to rotatable relative to a stationary portion that does not rotate even during use; and
the rotation transmission state switching device is configured to switch modes thereof between at least one mode of a locked mode or a one-way clutch mode, and a free mode, the locked mode, by the protruding portions being positioned at positions offset in the circumferential direction or the axial direction from the first engaging pawl and the second engaging pawl so as to engage the first engaging pawl and the second engaging pawl with the engaging recessed portions, preventing relative rotation between the first member and the second member regardless of a relative rotation direction between the first member and the second member; the one-way clutch mode, by the protruding portions pressing only one engaging pawl of the first engaging pawl and the second engaging pawl in the radial direction or the axial direction so as to retract the one engaging pawl from the engaging recessed portions and engage the other engaging pawl of the first engaging pawl and the second engaging pawl with the engaging recessed portions, allowing only rotation of the one member in a predetermined direction relative to the other member and preventing rotation of the one member in a direction opposite to the predetermined direction relative to the other member; and the free mode, by the protruding portions pressing the first engaging pawl and the second engaging pawl in the radial direction or the axial direction so as to retract both the first engaging pawl and the second engaging pawl from the engaging recessed portions, allowing relative rotation between the first member and the second member regardless of the relative rotation direction between the first member and the second member; and
the control device includes:
a reduction ratio switching function configured to switch the modes of the electric friction clutch device and the modes of the rotation transmission state switching device based on the electric actuator rotationally driving the drive cam , thereby switching the two-speed transmission between a high reduction ratio mode in which a reduction ratio between the input member and the output member is large, and a low reduction ratio mode in which the reduction ratio between the input member and the output member is small; and
a cooperative control function, when torque is passing through the two-speed transmission from a side of the output member to a side of the input member side, and torque is applied to the one member to rotate the one member toward one side in the circumferential direction relative to the other member, and the rotation transmission state switching device prevents the one member from rotating toward the one side in the circumferential direction relative to the other member, executing a pre-shift process reducing a regenerative torque of the drive motor and increasing a braking force by the friction brake device, before retracting one engaging pawl of the first engaging pawl and the second engaging pawl that extends toward the other side in the circumferential direction from the fist base portion or the second base portion pivotally supported by the second member from the engaging recessed portions by pressing the one engaging pawl in the radial direction or the axial direction by the protruding portions in response to mode switching of the two-speed transmission by the reduction ratio switching function.

2. The drive apparatus for electric vehicle according to claim 1, wherein the regenerative torque of the drive motor is reduced to zero in the pre-shift process.

3. The drive apparatus for electric vehicle according to claim 1 or claim 2, wherein
the two-speed transmission is configured to be switchable to the locked mode; and
the reduction ratio switching function switches the two-speed transmission to the high reduction ratio mode by switching the electric friction clutch device to the disconnected mode and the rotation transmission state switching device to the locked mode, and switches the two-speed transmission to the low reduction ratio mode by switching the electric friction clutch device to the connected mode and the rotation transmission state switching device to the free mode.

4. The drive apparatus for electric vehicle according to claim 3, wherein
the two-speed transmission is configured to be switchable to the one-way clutch mode; and
the control device executes the cooperative control function while the two-speed transmission is being switched from the high reduction ratio mode to the low reduction ratio mode and before the rotation transmission state switching device is switched from the locked mode to the one-way clutch mode.

5. The drive apparatus for electric vehicle according to claim 4, wherein
the cooperative control function performs the pre-shift process, and retracts the one engaging pawl from the engaging recessed portions by pressing the one engaging pawl in the radial direction or the axial direction by the protruding portions, and then perform an inertia process increasing a drive torque of the drive motor in the same direction as the regenerative torque acting on the drive motor so as to promote a decrease in rotational speed of the motor output shaft, and then, when the rotational speed of the motor output shaft begins to decrease, reducing the drive torque of the drive motor.

6. The drive apparatus for electric vehicle according to claim 5, wherein the cooperative control function, after performing the inertia process, perform a shift completion process adjusting a fastening force of the friction engagement portion to a magnitude such that a torque that can be transmitted without slippage between the at least one first friction plate and the at least one second friction plate is equal to or greater than a torque that passes through the friction engagement portion after the two-speed transmission has completely switched to the low reduction ratio mode, and then increasing the regenerative torque of the drive motor while reducing the braking force of the friction brake device.

7. The drive apparatus for electric vehicle according to any one of claims 1 to 6, wherein the electric friction clutch device includes a return spring configured to elastically bias the at least one first friction plate and the at least one second friction plate in directions away from each other.

8. The drive apparatus for electric vehicle according to any one of claims 1 to 7, wherein the electric friction clutch device further includes an elastic biasing mechanism provided between the first clutch member or the second clutch member and the friction engagement portion and is configured to elastically bias the at least one first friction plate and the at least one second friction plate in directions pressing them against each other.

9. The drive apparatus for electric vehicle according to any one of claims 1 to 7, wherein the electric friction clutch device further includes an elastic biasing mechanism arranged between the friction engagement portion, and the driven cam and is configured to elastically bias the friction engagement portion and the driven cam in directions away from each other.

10. The drive apparatus for electric vehicle according to any one of claims 1 to 9, wherein
the two-speed transmission further includes a planetary gear mechanism including a sun gear, a ring gear arranged coaxially around the sun gear, a carrier supported to be rotatable relative to the sun gear and the ring gear, and a plurality of planetary gears engaged with the sun gear and the ring gear and supported by the carrier to be rotatable about their own central axes;
an input element that is one element of the sun gear, the ring gear, and the carrier is connected to the input member so as to rotate integrally with the input member;
an output element that is another element of the sun gear, the ring gear, and the carrier which is apart from the input element, is connected to the output member so as to rotate integrally with the output member; and
a rotating element that is a remaining element of the sun gear, the ring gear, and the carrier which is apart from the input element and the output element, is connected to the rotating member so as to rotate integrally with the rotating member.
